(19) 

**Europäisches Patentamt**
**European Patent Office**
**Office européen des brevets**

(11) **EP 4 052 880 B1**

(12) **EUROPEAN PATENT SPECIFICATION**

(45) Date of publication and mention
of the grant of the patent:
**01.07.2026 Bulletin 2026/27**

(21) Application number: **20881537.3**

(22) Date of filing: **30.10.2020**

(51) International Patent Classification (IPC):
*B29C 45/00* (2006.01)    *F16J 15/10* (2006.01)
*B29C 45/27* (2006.01)    *B29C 45/26* (2006.01)
*H01M 8/0273* (2016.01)    *H01M 8/0276* (2016.01)
*H01M 8/0284* (2016.01)    *H01M 8/0286* (2016.01)

(52) Cooperative Patent Classification (CPC):
**F16J 15/102; B29C 45/2708; F16J 15/106;**
**H01M 8/0273; H01M 8/0276; H01M 8/0278;**
**H01M 8/0284; H01M 8/0286;** B29C 45/2669;
Y02E 60/50; Y02P 70/50

(86) International application number:
**PCT/JP2020/040911**

(87) International publication number:
**WO 2021/085618 (06.05.2021 Gazette 2021/18)**

(54) **THIN RESIN SHEET MEMBER AND METHOD FOR MANUFACTURING THE SAME**

DÜNNE HARZSCHICHT UND VERFAHREN ZU IHRER HERSTELLUNG

ÉLÉMENT EN FEUILLE DE RÉSINE MINCE ET SON PROCÉDÉ DE FABRICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **01.11.2019 JP 2019199706**

(43) Date of publication of application:
**07.09.2022 Bulletin 2022/36**

(73) Proprietors:
• **Shimizu Industry Co., Ltd.**
  **Hitotsugicho**
  **Kariya-shi**
  **Aichi 448-8534 (JP)**
• **Toagosei Co., Ltd.**
  **Minato-ku**
  **Tokyo 105-8419 (JP)**

(72) Inventors:
• **IKEHARA, Yoichi**
  **Chasenbo-shita, Hitotsugicho, Kariya-shi, Aichi**
  **448-8534 (JP)**

• **TSUTSUMI, Atsushi**
  **Chasenbo-shita, Hitotsugicho, Kariya-shi, Aichi**
  **448-8534 (JP)**
• **KITADE, Tomohiro**
  **Chasenbo-shita, Hitotsugicho, Kariya-shi, Aichi**
  **448-8534 (JP)**
• **ASAKAWA, Hiroki**
  **Chasenbo-shita, Hitotsugicho, Kariya-shi, Aichi**
  **448-8534 (JP)**
• **TANIZAWA, Naoki**
  **Nagoya-shi, Aichi 460-0003 (JP)**
• **YAMAGA, Hiroyuki**
  **Nagoya-shi, Aichi 455-0026 (JP)**

(74) Representative: **Eisenführ Speiser**
  **Patentanwälte Rechtsanwälte PartGmbB**
  **Postfach 10 60 78**
  **28060 Bremen (DE)**

(56) References cited:
**WO-A1-2014/147008**    **JP-A- 2003 071 886**
**JP-A- 2003 071 886**    **JP-A- 2004 066 720**
**JP-A- 2016 207 445**    **JP-A- H05 200 789**
**JP-A- S6 140 129**    **JP-A- S61 185 426**
**US-A1- 2015 207 156**

EP 4 052 880 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a thin resin sheet member and a method for manufacturing the same.

BACKGROUND ART

US 2015/0207156 A1 refers to a method for forming variable section thicknesses from a uniformly thick resinous sheet in a PEM fuel cell. A method for forming a seal in a fuel cell includes a step of providing a sheet including a layer of resinous material. A first fold is formed in the sheet. The first fold extends from a substantially planar section of the sheet having a first side section and a second side section opposing the first side section and connected by a top section. A gasket is formed by folding the first fold over towards the planar section to form a compound fold. The compound fold is placed between a first fuel cell component and a second fuel cell component to form the seal therein. A fuel cell incorporating the gasket is also provided.

To provide a multi-layer injection molding comprising a hard layer excellent in rigidity and a flexible soft layer, even though a soft layer is not crosslinked, excellent in heat resistance capable of being used at 50°C or higher under the general living environment and further easy to recycle a material, and the manufacturing method, JP 2004066720A provides a multi-layer injection molding body is composed of the hard layer comprising at least one or more kind of crystalline polyolefins (A) selected from the group consisting of an ethylene copolymer and a propylene copolymer having specific density and MRF, and the soft layer comprising an ethylene/a-olefin copolymer (B) to be manufactured by using a metallocene catalyst, and having specific density, MFR, Mw/Mn, a melting peak temperature, a melting transition heat and flexural rigidity.

To cut a resin product molded in a cavity and a resin molding part molded by a runner and a side gate into the resin product without imparting an adverse influence to the product by using a gate cutting member, JP2003071886 A refers to a mold for injection molding comprises the cavity of a product shape, the runner as a part of a molding material passage between molds when the molds are closed, a side gate formed to overlap a part on a thick part of the cavity to communicate with the runner through the cavity, and a gate cutting member provided movably or retractably in the overlapping part of the gate cutting member on the side gate to cut off between the side gate and the cavity. When the cutting member is advanced into the overlapping part of the side gate, the cutting member is provided at the fixed mold side or the movable mold side so that the resin advances in a direction reverse to the resin flowing direction from the runner toward the cavity.

WO 2014 / 147008 A1 refers to a melt conducting system for in-mould decoration or in-mould labelling processes for injection moulding flat plastic parts, comprising at least one film gate and a runner, has between the gate and the runner an accumulation chamber with a cross section that is extended transversely in relation to the direction of flow of the injected material in comparison with the runner.

To obtain a seal material that is free from a weld and whose performance and quality are stable, by flowing a rubber material in a filmy state from a ringlike runner formed along a seal ring groove into the seal ring groove simultaneously throughout it, JP61185426 A refers to the following: When a rubber material is injected from an injection nozzle via a sprue just over a ringlike runner, since a film gate has a fine clearance, and the flow resistance is high, the rubber material goes throughout the ringlike runner. The pressure then increases further, and the rubber material flows as a film from the ringlike runner into a seal ring groove simultaneously throughout it to fill the seal ringlike runner.

To obtain seal material free from weld and stable in performance and quality by supplying rubber material all round into a sealing groove in the shape of film, JP61040129 A refers to a ring type liner provided near the inner circumference side of a seal ring groove. In this way, an injection nozzle and a sprue are arranged at the deflected position on the plane against the seal ring groove. The seal ring groove and a ring type liner are connected all round through the film gate at the fine clearance . Rubber material is injected from the injection nozzle and injected just from above the ring type liner through the sprue. The film gate s a fine clearance and the resistance of flow is large. The resistance spreads all round the ring type liner and the pressure rises further. Accordingly, as shown by the arrow, the rubber flows from all round the ring type liner into the seal ring groove nearly at the same time in the form of film to fill the seal ring groove.

As a method for manufacturing a fuel cell gasket which is an example of a thin resin sheet member, it is known that an extruded thin resin film is formed into a desired shape by press working. Patent Document 1 discloses a manufacture of a fuel cell gasket by injection molding.

JP 2003-071886 A discloses a method for manufacturing a thin resin sheet member.

PRIOR ART DOCUMENT

PATENT DOCUMENT

Patent Document 1: JP 2016-207445 A

SUMMARY OT THE INVENTION

PROBLEMS TO BE SOLVED BY THE INVENTION

A fuel cell gasket manufactured by press working on a thin resin film obtained by extrusion molding is inferior in dimensional stability.

A fuel cell gasket preferably has a small thickness from the viewpoint of downsizing a fuel cell. However, the fuel cell gasket manufactured by injection molding disclosed in Patent Document 1 has a minimum thickness of 0.2 mm, and there is room for further reducing the thickness.

An object of the present invention is to provide a thin resin sheet member made of thin resin having good dimensional stability.

MEANS FOR SOLVING THE PROBLEMS

A first aspect of the present invention is a thin resin sheet member including a pair of main surfaces opposing each other, wherein the thin resin sheet member has a maximum thickness of 40 $\mu$m or more and 450 $\mu$m or less, the maximum thickness being a maximum interval between the pair of main surfaces, and the thin resin sheet member has a region in which a plurality of coherent pattern lines appear when viewed from a direction facing the pair of main surfaces, the plurality of coherent pattern lines being arranged at intervals in a direction in which one edge portion and another edge portion opposing the one edge portion oppose each other, and a pair in the plurality of coherent pattern lines adjacent to each other do not intersect.

Specifically, the region is 50% or more of a total area of the pair of main surfaces.

The thin resin sheet member having a region in which the regular coherent pattern lines appear as described above is not attributed to a manufacture by press working on an extruded thin resin film but attributed to a manufacture by injection molding of an aspect as described later, that is, by the injection molding according to the manufacturing method of the second aspect. The thin resin sheet member of the present invention manufactured by such injection molding has excellent dimensional stability as compared with a thin resin sheet member made of extruded thin resin film.

The thin resin sheet member according to the present invention has a maximum thickness of 40 $\mu$m or more and 450 $\mu$m or less, that is, the sheet member is further thinned than a thin resin sheet member manufactured by conventional injection molding. Therefore, the thin resin sheet member according to the present invention can contribute to downsizing of a fuel cell when the sheet member is used as a fuel cell gasket.

A second aspect of the present invention is a method for manufacturing a thin resin sheet member, the method including preparing a forming mold defining a cavity including a product portion in which a thin resin sheet member is molded, a gate / runner portion communicating with a molding machine injection unit, and a land portion communicating with the gate/runner portion and communicating with one edge portion of the product portion, wherein the land portion has a thickness larger than a thickness of the product portion, and supplying a molten resin from the molding machine injection unit to the gate/runner portion, wherein after the molten resin fully fills the land portion, the molten resin flows from the one edge portion into the product portion and flows toward another edge portion opposing the one edge portion of the product portion.

After the molten resin fully fills the land portion, the molten resin flows from one edge portion of the product portion into the product portion, and flows toward another edge portion opposing the one edge portion of the product portion. As a result, the resin flows in one direction from one edge portion to the other edge portion in the product portion, and the orientation of the resin is aligned in this flow direction. With the orientation of the resin being aligned like this, a thin resin sheet member having excellent dimensional stability is obtained as compared with a thin resin sheet member made of extruded thin resin film.

In the thin resin sheet member obtained by the manufacturing method of the second aspect of the present invention, the orientation of the resin is aligned in one direction as described above. Therefore, the thin resin sheet member has a region in which a plurality of coherent pattern lines arranged at intervals in the direction in which the resin is oriented, that is, in the direction in which one edge portion of the product portion and another edge portion opposing the one edge portion oppose each other (direction in which one edge portion of the thin resin sheet member and another edge portion opposing the one edge portion oppose each other) appear, and a pair in the coherent pattern lines adjacent to each other do not intersect.

The thickness of the land portion may be set to 1.3 times or more and 24 times or less the thickness of the product portion.

The average thickness of the land portion may be set to 300 $\mu$m or more and 1200 $\mu$m or less.

According to the invention the land portion may communicate with an entire region of an inner peripheral edge portion of the product portion, and after the molten resin fills the land portion, the molten resin may flow from the inner peripheral edge portion into the product portion and flow toward an outer peripheral edge portion of the product portion.

Alternatively, according to the invention the land portion may communicate with an entire region of an outer peripheral edge portion of the product portion, and after the molten resin fills the land portion, the molten resin may flow from the outer peripheral edge portion into the product portion and flow toward an inner peripheral edge portion of the product portion.

Alternatively, according to the invention the product portion may have an outer peripheral edge portion including a plurality of edge portions, the land portion may communicate with one edge portion constituting a part of the outer peripheral edge portion of the product portion, and after the molten resin fills the land portion, the molten resin may flow from the one edge portion toward another edge portion opposing the one edge portion constituting a part of the outer peripheral edge portion.

The resin may be a thermoplastic resin having a melt mass flow rate of 10 g/ 10 min or more and 300 g/ 10 min or less and a heat of fusion of 0 mj/mg or more and 150 mj/mg or less.

EFFECT OF THE INVENTION

According to the present invention, a thin resin sheet member having good dimensional stability that is thinned to have a maximum thickness of 40 $\mu$m or more and 450 $\mu$m or less is obtained.

BRIEF DESCRIPTION OF THE DRAWINGS

Fig. 1 is a schematic perspective view of a sheet member (fuel cell gasket) according to a first embodiment of the present invention;
Fig. 2 is a photograph of a part of Fig. 1;
Fig. 3 is a schematic plan view of a forming mold for manufacturing the sheet member according to the first embodiment;
Fig. 4 is a cross-sectional view taken along the line IV-IV in Fig. 3;
Fig. 5 is a schematic plan view of a lower mold for explaining an orientation of a resin in injection molding;
Fig. 6 is a schematic plan view of a sheet member when taken out from a forming mold;
Fig. 7 is a cross-sectional view taken along the line VII-VII in Fig. 6;
Fig. 8 is a cross-sectional view similar to Fig. 4, of another example of a forming mold that can be used for manufacturing the sheet member of the first embodiment;
Fig. 9 is a schematic plan view similar to Fig. 5, of another forming mold (lower mold) that can be used for manufacturing the sheet member of the first embodiment;
Fig. 10 is a schematic plan view of a sheet member when taken out from the forming mold of Fig. 9;
Fig. 11 is a cross-sectional view taken along the line XI-XI in Fig. 10;
Fig. 12 is a schematic plan view similar to Fig. 5, of another forming mold (lower mold) that can be used for manufacturing the sheet member of the first embodiment;
Fig. 13 is a schematic plan view of the sheet member when taken out from the forming mold of Fig. 12;
Fig. 14 is a cross-sectional view similar to Fig. 4, of another example of a forming mold that can be used for manufacturing the sheet member of the first embodiment;
Fig. 15 is a schematic plan view of the sheet member when taken out from the forming mold of Fig. 14;
Fig. 16 is a cross-sectional view taken along the line XVI-XVI in Fig. 14;
Fig. 17 is a cross-sectional view similar to Fig. 14 showing an alternative of a land portion;
Fig. 18 is a cross-sectional view similar to Fig. 14 showing an alternative of a land portion;
Fig. 19 is a schematic perspective view of a sheet member according to a second embodiment of the present invention;
Fig. 20 is a schematic plan view similar to Fig. 5, of a forming mold (lower mold) that can be used for manufacturing the sheet member of the second embodiment;
Fig. 21 is a schematic plan view of the sheet member when taken out from the forming mold of Fig. 20;
Fig. 22 is a schematic plan view similar to Fig. 5, of another forming mold (lower mold) that can be used for manufacturing the sheet member of the second embodiment;
Fig. 23 is a schematic plan view of the sheet member when taken out from the forming mold of Fig. 22;
Fig. 24 is a schematic perspective view of a sheet member according to a third embodiment of the present invention;

Fig. 25 is a schematic plan view of a forming mold for manufacturing the sheet member according to the third embodiment;

Fig. 26 is a cross-sectional view taken along the line XXVI-XXVI in Fig. 25;

Fig. 27 is a schematic plan view similar to Fig. 5, of a forming mold (lower mold) that can be used for manufacturing the sheet member of the third embodiment;

Fig. 28 is a schematic plan view of the sheet member when taken out from the forming mold of Fig. 27;

Fig. 29 is a cross-sectional view taken along the line XXIX-XXIX in Fig. 28;

Fig. 30 is a schematic plan view of another forming mold for manufacturing the sheet member according to the third embodiment;

Fig. 31 is a cross-sectional view taken along the line XXXI-XXXI in Fig. 30;

Fig. 32 is a schematic plan view of the sheet member when taken out from the forming mold of Fig. 31;

Fig. 33 is a cross-sectional view taken along the line XXXIII-XXXIII in Fig. 32;

Fig. 34 is a schematic perspective view of a sheet member according to a fourth embodiment of the present invention;

Fig. 35 is a schematic plan view of a forming mold for manufacturing the sheet member according to the fourth embodiment;

Fig. 36 is a cross-sectional view taken along the line XXXVI-XXXVI in Fig. 35;

Fig. 37 is a schematic plan view similar to Fig. 5, of a forming mold (lower mold) that can be used for manufacturing the sheet member of the fourth embodiment;

Fig. 38 is a schematic plan view of the sheet member when taken out from the forming mold of Fig. 37;

Fig. 39 is a cross-sectional view taken along the line XXXIX-XXXIX in Fig. 38;

Fig. 40 is a schematic plan view of a sheet member according to a modification of the fourth embodiment;

Fig. 41 is a schematic plan view of a sheet member according to another modification of the fourth embodiment;

Fig. 42 is a schematic perspective view of a sheet member according to a fifth embodiment of the present invention;

Fig. 43 is a schematic plan view similar to Fig. 5, of a forming mold (lower mold) that can be used for manufacturing the sheet member of the fifth embodiment;

Fig. 44 is a schematic plan view of the sheet member when taken out from the forming mold of Fig. 43;

Fig. 45 is a schematic perspective view of a sheet member according to a modification of the fifth embodiment;

Fig. 46 is a schematic perspective view of a sheet member according to a sixth embodiment of the present invention;

Fig. 47 is a schematic plan view of a forming mold for manufacturing a sheet member according to a sixth embodiment;

Fig. 48 is a cross-sectional view taken along the line XXXXVIII-XXXXVIII in Fig. 47;

Fig. 49 is a schematic plan view of the sheet member when taken out from the forming mold of Fig. 48;

Fig. 50 is a cross-sectional view taken along the line L-L in Fig. 49;

Fig. 51 is a schematic perspective view of a sheet member according to a seventh embodiment of the present invention;

Fig. 52 is a schematic plan view of a forming mold for manufacturing the sheet member according to the seventh embodiment;

Fig. 53 is a cross-sectional view taken along the line LIII-LIII in Fig. 42;

Fig. 54 is a schematic plan view similar to Fig. 5, of a forming mold (lower mold) that can be used for manufacturing the sheet member of the seventh embodiment;

Fig. 55 is a schematic plan view of the sheet member when taken out from the forming mold of Fig. 49;

Fig. 56 is a schematic perspective view of a sheet member according to an eighth embodiment of the present invention;

Fig. 57 is a schematic plan view of a forming mold for manufacturing the sheet member according to the eighth embodiment;

Fig. 58 is a cross-sectional view taken along the line LVII-LVII in Fig. 57;

Fig. 59 is a schematic plan view similar to Fig. 5, of a forming mold (lower mold) that can be used for manufacturing the sheet member of the eighth embodiment;

Fig. 60 is a schematic plan view of the sheet member when taken out from the forming mold of Fig. 59;

Fig. 61 is a schematic plan view of a gasket used in an evaluation test;

Fig. 62 is a schematic plan view of a comparative example used in an evaluation test.

DESCRIPTION OF EMBODIMENTS

Hereinafter, embodiments of the present invention will be described with reference to the accompanying drawings.

(First Embodiment)

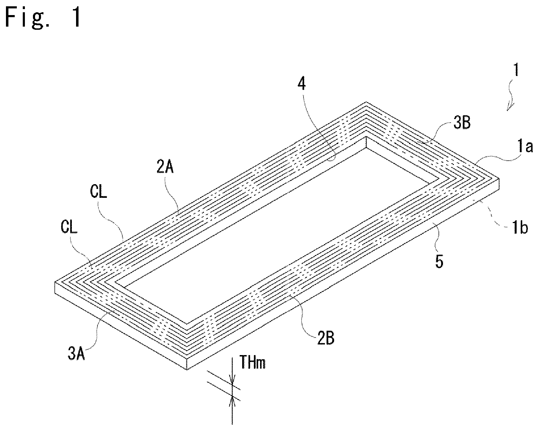

Fig. 1 shows a thin resin sheet member 1 (hereinafter, simply referred to as sheet member 1) according to a first embodiment of the present invention. The sheet member 1 of the present embodiment is a fuel cell gasket.

As described later, the sheet member 1 is manufactured by injection molding of a thermoplastic resin.

The sheet member 1 has two opposing surfaces having an area sufficiently larger than the other surfaces, that is, a pair of main surfaces 1a and 1b. In the present embodiment, the interval between the main surfaces 1a and 1b, that is, a thickness THm of the sheet member 1 is constant or uniform. The sheet member 1 (gasket) is thinner than a gasket manufactured by conventional injection molding. That is, the thickness THm of the sheet member 1 is set to 40 $\mu$m or more and 450 $\mu$m or less. The thickness THm of the sheet member 1 is preferably set to 50 $\mu$m or more and 350 $\mu$m or less, and more preferably 100 $\mu$m or more and less than 200 $\mu$m. The thickness THm of the sheet member 1 is not necessarily uniform. That is, different portions of the sheet member 1 may have different thicknesses THm. When the thickness THm of the sheet member 1 is not uniform, the maximum thickness, that is, the maximum value (maximum interval between main surfaces 1a and 1b) of the thickness THm is set to 40 $\mu$m or more and 450 $\mu$m or less, preferably 50 $\mu$m or more and 350 $\mu$m or less, and more preferably 100 $\mu$m or more and less than 200 $\mu$m.

The overall shape of the sheet member 1 of the present embodiment is a flat rectangular frame shape and includes a pair of longer portions 2A and 2B extending in the longer direction of the sheet member 1 and a pair of shorter portions 3A and 3B extending in the shorter direction of the sheet member 1 and connecting end portions of the longer portions 2A and 2B, respectively. The sheet member 1 of the present embodiment includes an inner peripheral edge portion 4 and an outer peripheral edge portion 5 each having a rectangular shape when viewed from a direction facing the main surfaces 2a and 2b.

Next, a method for manufacturing the sheet member 1 of the present embodiment (injection molding method) will be described.

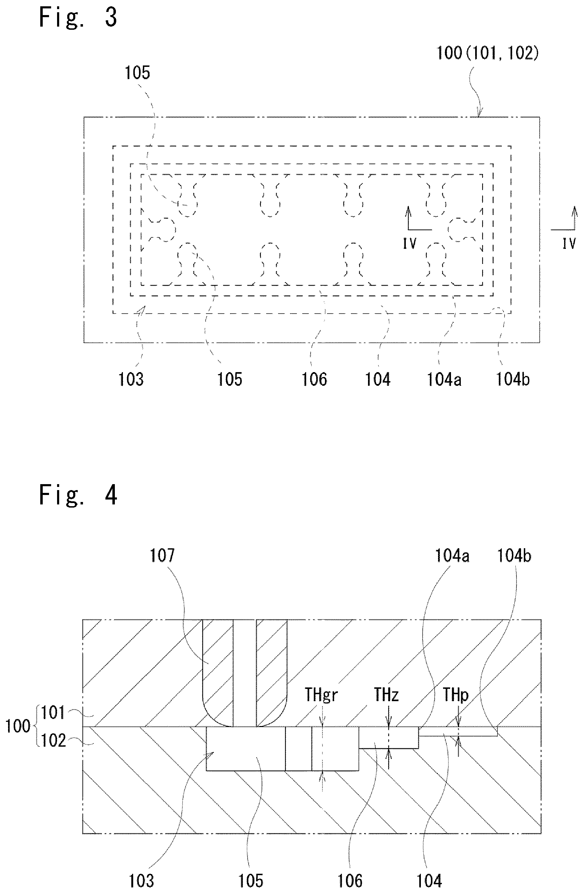

In Figs. 3 to 5, in the present embodiment, a forming mold 100 for injection molding the sheet member 1 includes an upper mold 101 and a lower mold 102. In the present embodiment, a cavity 103 defined by the upper mold 101 and the lower mold 102 includes one product portion 104, a plurality (10) of gate/runner portions 105, and one land portion 106.

The product portion 104 is a portion where the sheet member 1 is to be molded and has substantially the same size and shape as those of the sheet member 1. In particular, the product portion 104 has an inner peripheral edge portion 104a and an outer peripheral edge portion 104b corresponding to the inner peripheral edge portion 4 and the outer peripheral edge portion 5 of the sheet member 1, respectively. Both the inner peripheral edge portion 104a and the outer peripheral edge portion have a rectangular shape in plan view. A thickness THp of the product portion 104 is substantially the same as the thickness THm of the sheet member 1. That is, the maximum value of the thickness THp of the product portion 104 is set to 40 $\mu$m or more and 450 $\mu$m or less, preferably 50 $\mu$m or more and 350 $\mu$m or less, and more preferably 100 $\mu$m or more and less than 200 $\mu$m.

In the present embodiment, the gate/runner portions 105 are arranged inside the product portion 104 in plan view.

Each gate/runner portion 105 fluidically communicates with a molding machine injection unit (not shown) via a spool mechanism 107 provided in the upper mold 101. A molten thermoplastic resin is supplied from the molding machine injection unit to the gate/runner portion 105. The spool mechanism 107 supplies the thermoplastic resin to the gate/runner portion 105 only when the upper mold 101 and the lower mold 102 are clamped. Therefore, a trace corresponding to the shape of an outlet hole of the spool mechanism 107 remains in a second non-product portion 109 described later.

Each gate/runner portion 105 fluidically communicates with the land portion 106.

In the present embodiment, the land portion 106 is arranged inside the product portion 104 in plan view. The land portion 106 is interposed between the gate/runner portions 105 and the product portion 104. The land portion 106 has a rectangular shape in plan view and communicates with the entire region of the inner peripheral edge portion of the product portion 104.

The thickness THz of the land portion 106 is larger than the thickness THp of the product portion 104. For example, the thickness THz of the land portion 106 is set to 1.3 times or more and 24 times or less, preferably 2.5 times or more and 10 times or less the thickness THp of the product portion 104. The thickness THz of the land portion 106 is set to be equal to or less than the thickness THgr of the gate/runner portion 105. For example, the thickness TH of the land portion 106 is set to 0.12 times or more and 1.0 times or less the thickness THgr of the gate/runner portion 105. The thickness THp of the product portion 104, the thickness THz of the land portion 106, and the thickness THgr (average thickness) of the gate/runner portion 105 are set to satisfy the relationship of the following Formula (1).

$$THp < THz \leq THgr \quad (1)$$

The thickness THz of the land portion 106 satisfies the above conditions and is set to 300 $\mu$m or more and 1200 $\mu$m or less, preferably 500 $\mu$m or more and 1000 $\mu$m or less in terms of an average thickness. In the present embodiment, the thickness THz of the land portion 106 is constant, and the average thickness is set to 500 μm. In the present embodiment, the thickness THz of the land portion 106 is three times the thickness THp of the product portion 104.

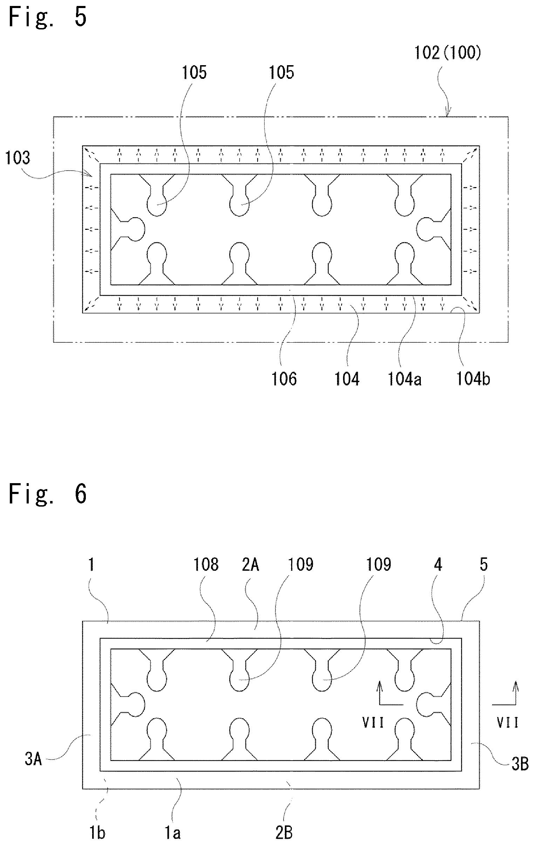

The molten thermoplastic resin supplied from the molding machine injection unit to the gate/runner portion 105 flows into the land portion 106, but the thermoplastic resin does not substantially flow into the product portion 104 until the land portion 106 is filled with the thermoplastic resin, that is, until the entire volume of the land portion 106 is occupied by the thermoplastic resin. When the molten thermoplastic resin is further supplied from the gate/runner portion 105 to the land portion 106 in a state where the entire volume of the land portion 106 is occupied by the thermoplastic resin, the molten thermoplastic resin simultaneously flows from the land portion 106 into the product portion 104 as indicated by broken line arrows in Fig. 5. More specifically, as indicated by broken line arrows in Fig. 5, the molten thermoplastic resin flows in one direction from the inner peripheral edge portion 104a toward the outer peripheral edge portion 104b of the product portion 104.

The land portion 106 functions as a portion for storing the molten thermoplastic resin in order to uniformly flow the required resin in one direction into the product portion 104. The thermoplastic resin needs to flow into the entire land portion 106 in preference to the inflow into the product portion 104. By setting the thickness THz of the land portion 106 to be thicker than the thickness THp of the product portion 104 as described above, the inflow of the thermoplastic resin of such an aspect is realized. When the inflow of the thermoplastic resin into the land portion 106 is completed, the internal pressure of the forming mold 100 increases, and the thermoplastic resin can flow from the land portion 106 into the product portion 104 having a smaller thickness. To realize such a uniform molten resin inflow state, the temperature of the forming mold 100 is preferably maintained at 20°C or more and 80°C or less, and preferably 40°C or more and 80°C or less. In the present embodiment, the temperature of the forming mold 100 is maintained at 40°C or more and 50°C or less. A cooling hole may be provided in the forming mold 100 (upper mold 101, lower mold 102) to maintain an appropriate temperature.

To realize the inflow state as described above, the thermoplastic resin preferably has a melt mass flow rate (measurement conditions: JIS K 7210 230°C, 2.16 kg) of 10 g/ 10 min or more and 300 g/ 10 min or less and a heat of fusion of 0 mj/mg or more and 150 mj/mg or less, preferably 50 mj/mg or more and 110 mj/mg or less.

Table 1 below shows examples of thermoplastic resins that can be employed.

[Table 1]

| Thermoplastic resin | Melting temperature (°C) | Mold temperature (°C) |
|---|---|---|
| Polypropylene (PP) | 140-220 | 20-80 |
| Polyethylene (PE) | 140-200 | 20-70 |
| Polybutylene terephthalate (PBT) | 250 | 80 |
| Polyethylene terephthalate (PET) | 250-290 | 90-120 |
| Polycarbonate (PC) | 270-370 | 50-130 |
| Polyamide (PA) | 240-300 | 50-140 |
| Polyacetal (POM) | 180-240 | 60-140 |
| Polyketone (POK) | 240-250 | 60-80 |
| Polysulfone (PSU) | 360-390 | 138-163 |
| Polyphenyl sulfone (PPSU) | 350-380 | 105-160 |
| Polyether sulfone (PES) | 345-385 | 138-160 |
| Polyphenylene sulfide (PPS) | 300-350 | 135-180 |
| Polyetherimide (PEI) | 355-390 | 130-160 |
| Polyetheretherketone (PEEK) | 365-380 | 175-205 |
| Modified polyphenyleneether (m-PPE) | 250-300 | 50-110 |
| Ethylene-vinyl acetate copolymer (EVA resin) | 130-190 | 20-55 |
| Cyclic olefin copolymer (COC) | 260-280 | 80-90 |

The orientation of the thermoplastic resin is aligned in the flow direction of the thermoplastic resin as described above (broken line arrows in Fig. 5). With the orientation of the thermoplastic resin being aligned like this, the sheet member 1 having excellent dimensional stability is obtained as compared with a thin resin sheet member made of extruded thin resin film.

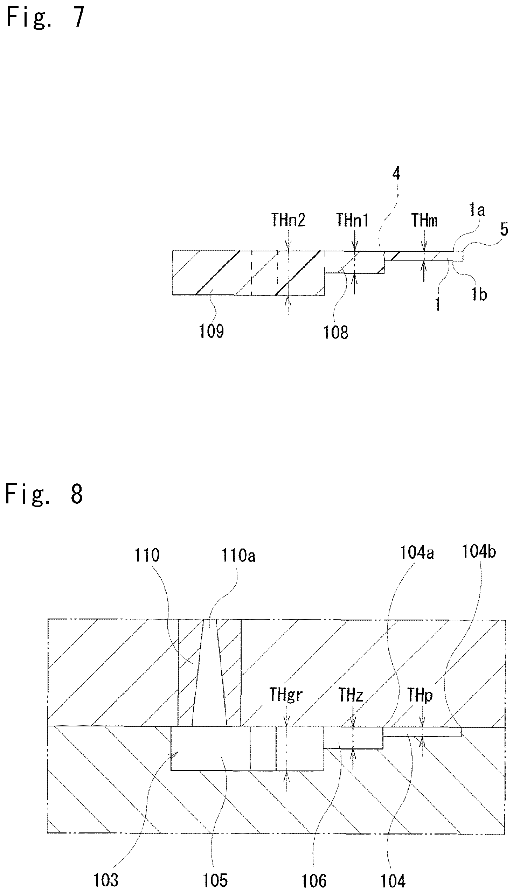

Figs. 6 and 7 show the sheet member 1 taken out from the forming mold 100 after completion of injection molding. A first non-product portion 108 having a rectangular frame shape and corresponding to the land portion 106 is formed inside the sheet member 1, and a second non-product portion 109 corresponding to the gate/runner portion 105 is formed further inside the first non-product portion 108. The first non-product portion 108 has a thickness THn1 corresponding to the thickness THz of the land portion 106, and the second non-product portion 109 has a thickness THn2 corresponding to the thickness THgr of the gate/runner portion 105. By removing the first non-product portion 108 and the second non-product portion 109 by means such as cutting, the manufacturing of the sheet member 1 is completed.

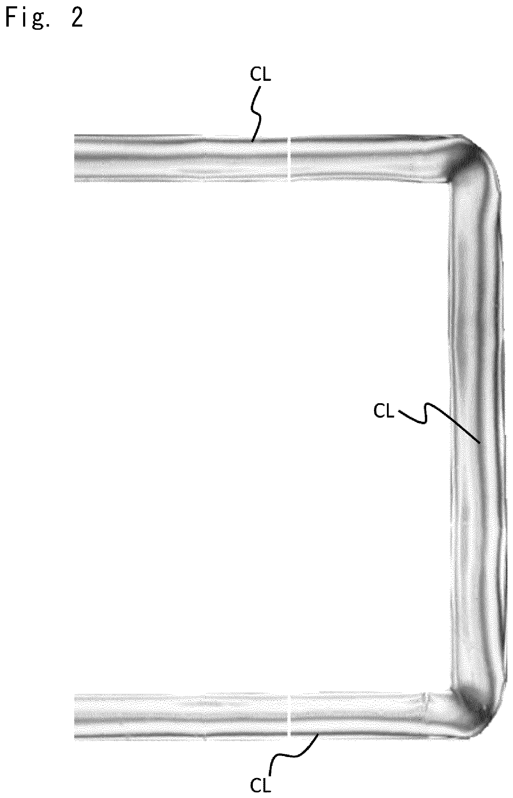

As described above, with the orientation of the thermoplastic resin being aligned in the flow direction of the thermoplastic resin (broken line arrows in Fig. 5) in the product portion 104 of the cavity 103, regular coherent pattern lines appear in the sheet member 1. This coherent pattern lines can be observed by irradiating the sheet member 1 with illumination light. Specifically, in the sheet member 1, a plurality of coherent pattern lines CL conceptually indicated by two-dot chain lines in Fig. 1 appear corresponding to the flow direction (orientation direction of the thermoplastic resin) of the thermoplastic resin indicated by broken line arrows in Fig. 5. Fig. 2 is a photograph of a part of Fig. 1, in which the coherent pattern lines CL appear. In the present embodiment, when the sheet member 1 is viewed from the direction facing the main surfaces 2a and 2b, a plurality of coherent pattern lines CL arranged at intervals in the direction in which the inner peripheral edge portion 4 and the outer peripheral edge portion 5 oppose each other appear in both the longer portions 2A and 2B and the shorter portions 3A and 3B. A pair in the coherent pattern lines CL adjacent to each other do not intersect.

The sheet member 1 of the present embodiment having a region in which the regular coherent pattern lines CL appear as described above is not attributed to the manufacture by press working on an extruded thin resin film but attributed to the manufacture by injection molding as described above. That is, it can be said that the appearance of the regular coherent pattern lines CL as described above indirectly indicates that the orientation of the thermoplastic resin is aligned and the sheet member 1 manufactured by injection molding as described above has excellent dimensional stability as compared with a thin resin sheet member made of extruded thin resin film.

Because the sheet member 1 (gasket) is manufactured by injection molding such that the orientation direction of the thermoplastic resin is aligned as described above, the sheet member 1 has excellent dimensional stability as compared with a gasket made of extruded thin resin film. The thickness THm of the sheet member 1 (gasket) is 40 $\mu$m or more and 450 $\mu$m or less, preferably 50 $\mu$m or more and 350 $\mu$m or less, and more preferably 100 $\mu$m or more and less than 200 $\mu$m, which is further thinned than a gasket manufactured by conventional injection molding. Therefore, using the sheet member 1 of the present embodiment as a gasket enables downsizing of a fuel cell.

As described above, the sheet member 1 of the present embodiment has excellent dimensional stability because the orientation direction of the thermoplastic resin is aligned. However, the orientation direction of the thermoplastic resin is not necessarily aligned in the entire region of the sheet member 1. In other words, the entire main surfaces 1a and 1b are not necessarily the regions in which the plurality of coherent pattern lines CL are arranged at intervals in the direction in which the inner peripheral edge portion 4 and the outer peripheral edge portion 5 oppose each other as described above, and the adjacent coherent pattern lines CL do not intersect each other. When such a region is 50% or more, preferably 70% or more of the total area of the main surfaces 1a and 1b, the dimensional stability because of the alignment of the orientation direction of the thermoplastic resin can improve.

Figs. 8 to 18 show modifications of the first embodiment. These embodiments can also be applied to second to eighth embodiments described later.

In the modification of Fig. 8, a spool bush 110 in which a spool 110a is formed is attached to the upper mold 101. That is, the forming mold 100 in this modification is a so-called direct spool mold. In the present modification, an elongated conical trace corresponding to the spool 110a remains in the second non-product portion 109.

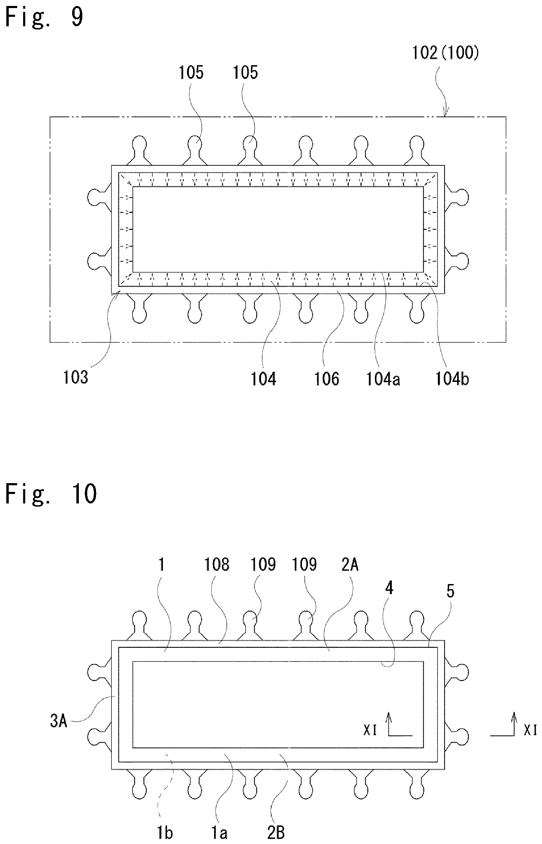

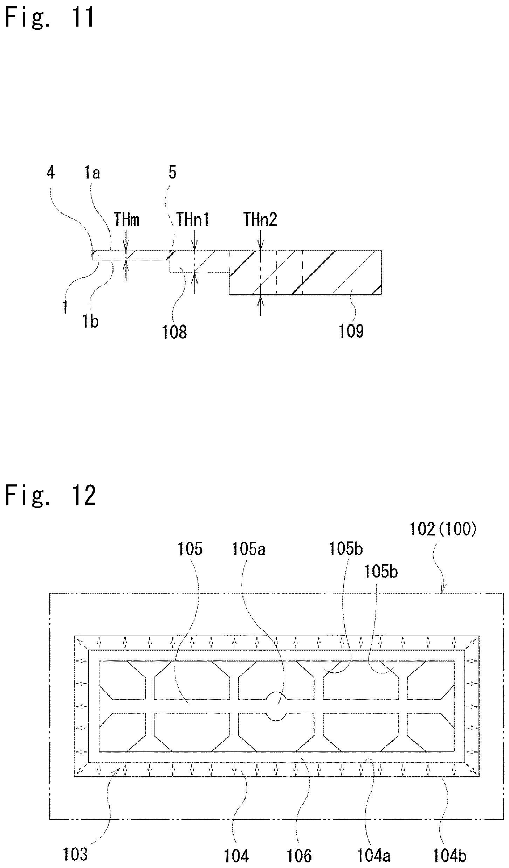

In the modification of Fig. 9, the cavity 103 defined by the forming mold 100 includes the land portion 106 arranged outside the product portion 104 and a plurality of gate/runner portions 105 arranged outside the land portion 106. In injection molding, the molten thermoplastic resin flows in one direction from the outer peripheral edge portion 104a toward the inner peripheral edge portion 104b of the product portion 104 as indicated by broken line arrows in Fig. 9. As shown in Figs. 10 and 11, in the sheet member 1 taken out from the forming mold 100 after completion of injection molding, the first non-product portion 108 corresponding to the land portion 106 is formed outside the product portion 104, and the second non-product portion 109 corresponding to the gate / runner portion 105 is formed outside the first non-product portion 108.

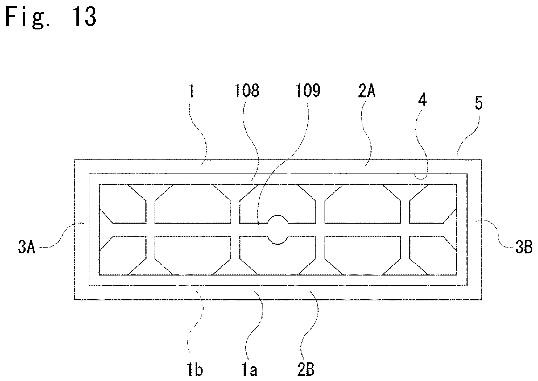

In the modification shown in Figs. 12 and 13, the gate/runner portion 105 includes a portion opposing the spool mechanism 107 or the spool bush 110, that is, one gate portion 105a into which a molten thermoplastic resin flows, inside the land portion 106. In addition, the gate/runner portion 105 in the present embodiment includes a plurality of runner portions 105b branched from the gate portion 105a and connected to the land portion 106.

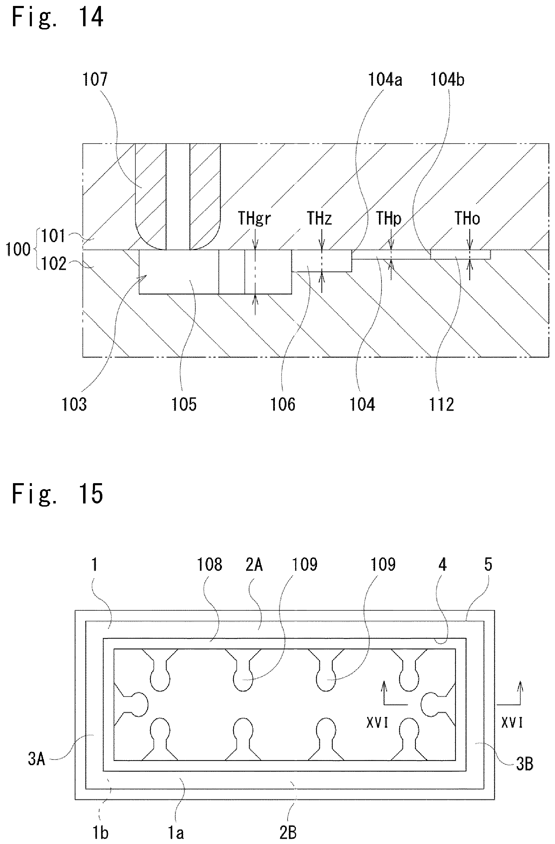

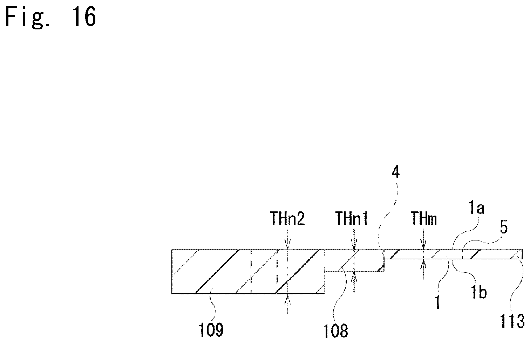

In the modification shown in Fig. 14, an overflow portion 112 is provided in the cavity 103 in such a manner as to surround the entire region of the outer side of the product portion 106. Therefore, as shown in Figs. 15 and 16, in a state of being taken out from the forming mold 100 after injection molding, a third non-product portion 113 is formed in such a manner as to surround the entire region of the outer side of the product portion 104. The third non-product portion 113 is removed from the sheet member 1 by means such as cutting similarly to the first and second non-product portions 108 and 109. In the present embodiment, a thickness THo of the overflow portion 112 is set to be the same as the thickness THp of the product portion 106. By providing the overflow portion 112, it is possible to prevent a portion not locally filled with the thermoplastic resin from being generated in the product portion 106.

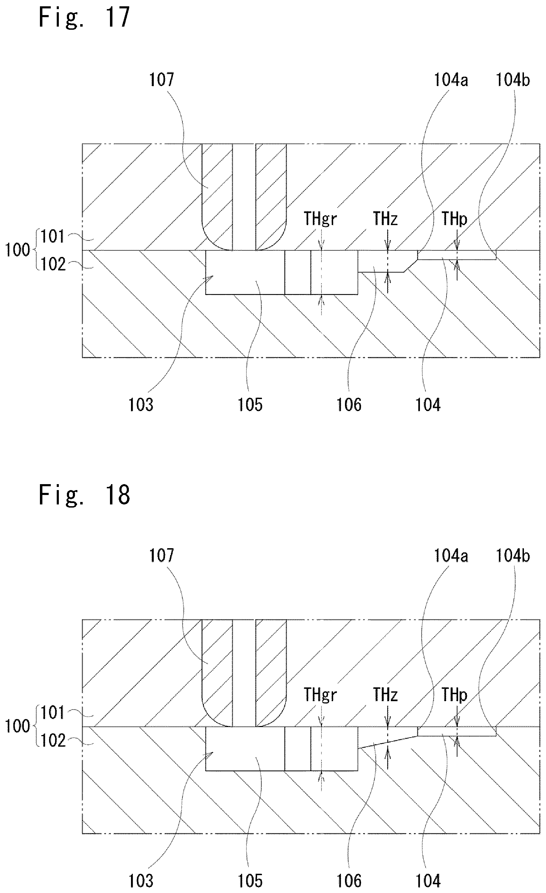

In the modification shown in Fig. 17, the thickness THz is constant in the portion on the gate/runner portion 105 side of the land portion 106, but the thickness THz gradually decreases toward the product portion 104 in the portion of the land portion 106 connected to the product portion 104. In the modification shown in Fig. 18, the thickness THz of the land portion 106 gradually decreases from the portion connected to the gate/runner portion 105 toward the portion connected to the product portion 104.

Hereinafter, second to eighth embodiments of the present invention will be described. The matters not particularly mentioned in these embodiments are the same as those in the first embodiment. In the drawings of these embodiments, the same or similar elements as those of the first embodiment are denoted by the same reference numerals.

(Second Embodiment)

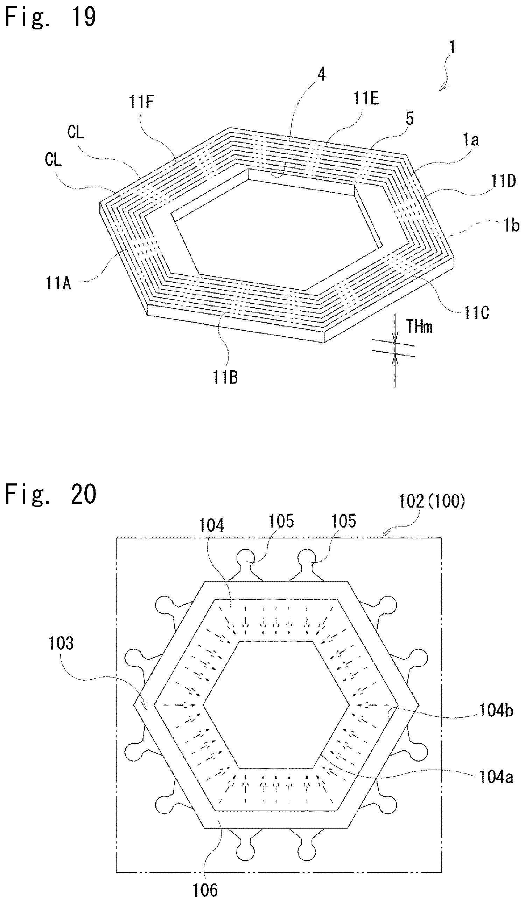

Fig. 19 shows a sheet member 1 according to a second embodiment of the present invention.

The sheet member 1 of the present embodiment has a hexagonal shape as its overall shape, and includes six straight side portions 11A, 11B, 11C, 11D, 11E, and 11F.

In Fig. 20, the forming mold 100 according to the present embodiment is provided with the land portion 106 having a hexagonal shape outside the product portion 104 having a hexagonal shape in plan view. Two gate/runner portions 105 are provided outside each portion corresponding to the side portions 11A to 11F of the land portion 106. The molten thermoplastic resin supplied from the molding machine injection unit to the gate/runner portion 105 fills the land portion 106, and then simultaneously flows from the land portion 106 into the product portion 104 as indicated by broken line arrows in Fig. 20. More specifically, as indicated by broken line arrows in Fig. 20, the molten thermoplastic resin flows in one direction from the outer peripheral edge portion 104b toward the inner peripheral edge portion 104a of the product portion 104.

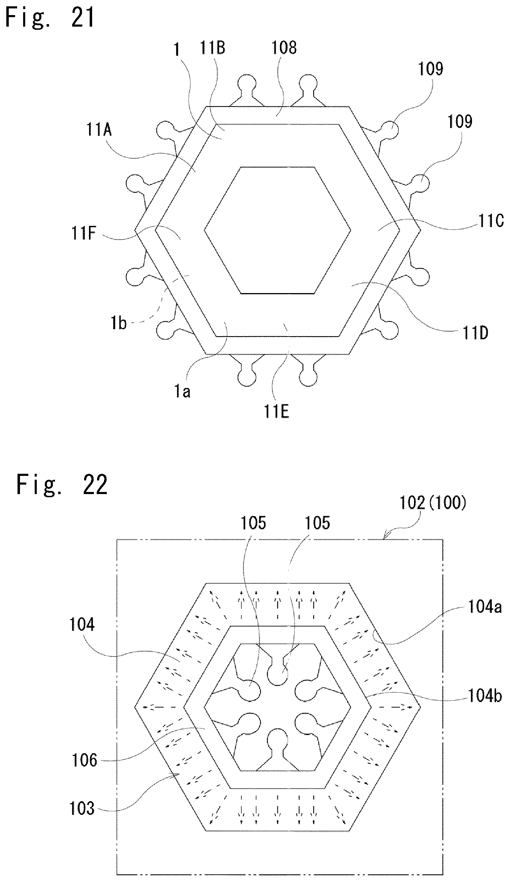

Fig. 21 shows the sheet member 1 taken out from the forming mold 100 after completion of injection molding. The first non-product portion 108 having a hexagonal shape and corresponding to the land portion 106 is formed outside the sheet member 1, and the second non-product portion 109 corresponding to the gate/runner portion 105 is formed further outside the first non-product portion 108.

With the orientation of the thermoplastic resin being aligned in the flow direction of the thermoplastic resin (broken line arrows in Fig. 20) in the product portion 104 of the cavity 103, a plurality of coherent pattern lines CL conceptually indicated by two-dot chain lines in Fig. 19 appear in the sheet member 1. Specifically, in each of the side portions 11A to 11F, a plurality of coherent pattern lines CL arranged at intervals in a direction in which the inner peripheral edge portion 4 and the outer peripheral edge portion 5 oppose each other appear. A pair in the coherent pattern lines CL adjacent to each other do not intersect.

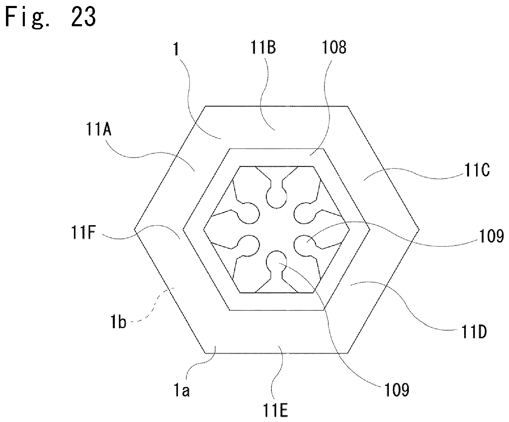

Figs. 22 and 23 show a modification of the second embodiment. In this modification, the cavity 103 defined by the forming mold 100 includes the land portion 106 arranged inside the product portion 104 and a plurality of gate/runner portions 105 arranged inside the land portion 106. In injection molding, the molten thermoplastic resin flows in one direction from the inner peripheral edge portion 104a toward the outer peripheral edge portion 104b of the product portion 104 as indicated by broken line arrows in Fig. 22. As shown in Fig. 23, in the sheet member 1 taken out from the forming mold 100 after completion of injection molding, the first non-product portion 108 corresponding to the land portion 106 is formed inside the product portion 104, and the second non-product portion 109 corresponding to the gate/runner portion 105 is formed inside the first non-product portion 108.

(Third Embodiment)

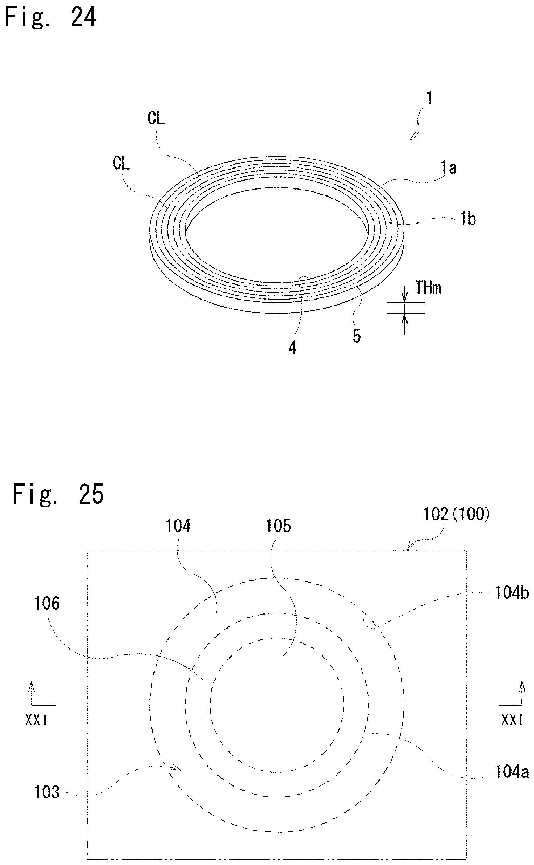

Fig. 24 shows the sheet member 1 according to a third embodiment of the present invention.

The sheet member 1 of the present embodiment has an annular shape. In the present embodiment, the sheet member 1 has a substantially perfect circular shape in plan view, but it may have an elliptical shape in plan view.

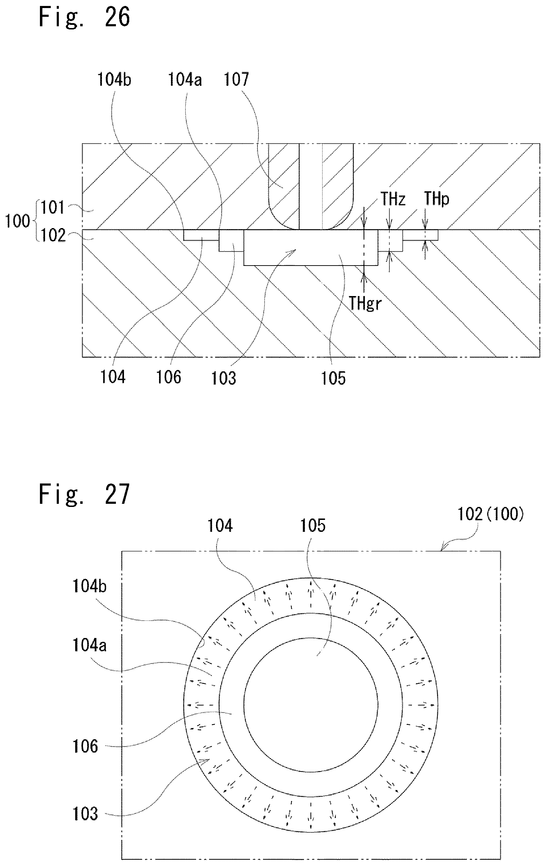

In Figs. 25 to 27, the forming mold 100 according to the present embodiment is provided with the land portion 106 having an annular shape inside the product portion 104 having an annular shape in plan view. A single gate/runner portion 105 having a cylindrical shape is provided inside the land portion 106. The entire region of the inside of the land portion 106 communicates with the gate/runner portion 105. The molten thermoplastic resin supplied from the molding machine injection unit to the gate/runner portion 105 fills the land portion 106, and then simultaneously flows from the land portion 106 into the product portion 104 as indicated by broken line arrows in Fig. 27.

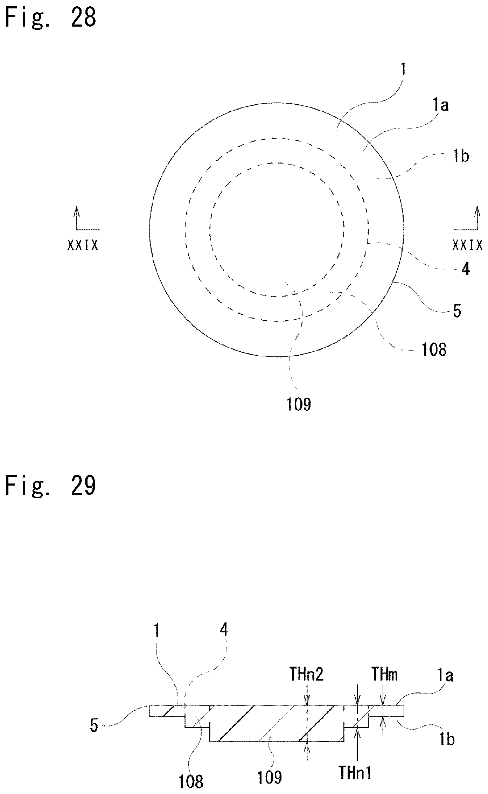

Figs. 28 and 29 show the sheet member 1 taken out from the forming mold 100 after completion of injection molding. The first non-product portion 108 having an annular shape and corresponding to the land portion 106 is formed outside the sheet member 1, and the second non-product portion 109 having a cylindrical shape and corresponding to the gate/runner portion 105 is formed further outside the first non-product portion 108. By removing the first non-product portion 108 and the second non-product portion 109, manufacturing of the sheet member 1 is completed. However, the sheet member 1 may be used as a finished product without removing the first non-product portion 108 and the second non-product portion 109. When the first non-product portion 108 and the second non-product portion 109 are not removed from the sheet member 1, these portions become thick portions having thicknesses THn 1 and THn2 larger than the interval (thickness THm) between the main surfaces 1a and 1b. Such thick portions are preferably 50% or less of the total area of the sheet member 1 in view of ensuring dimensional stability by aligning the orientation of the thermoplastic resin in the portion other than the thick portions of the sheet member 1. The sheet member 1 from which the first non-product portion 108 and the second non-product portion 109 are not removed can be used as a finished product in a modification of the present embodiment described later, as well as other embodiments other than the present embodiment and modifications thereof. The second non-product portion 109 is removed from the sheet member 1, but the sheet member 1 may be used as a finished product without removing the first non-product portion 108.

With the orientation of the thermoplastic resin being aligned in the flow direction of the thermoplastic resin (broken line arrows in Fig. 27) in the product portion 104 of the cavity 103, a plurality of coherent pattern lines CL appear in the sheet member 1 as conceptually indicated by two-dot chain lines in Fig. 24. Specifically, a plurality of coherent pattern lines CL arranged at intervals in a direction in which the inner peripheral edge portion 4 and the outer peripheral edge portion 5 oppose each other appear. A pair in the coherent pattern lines CL adjacent to each other do not intersect.

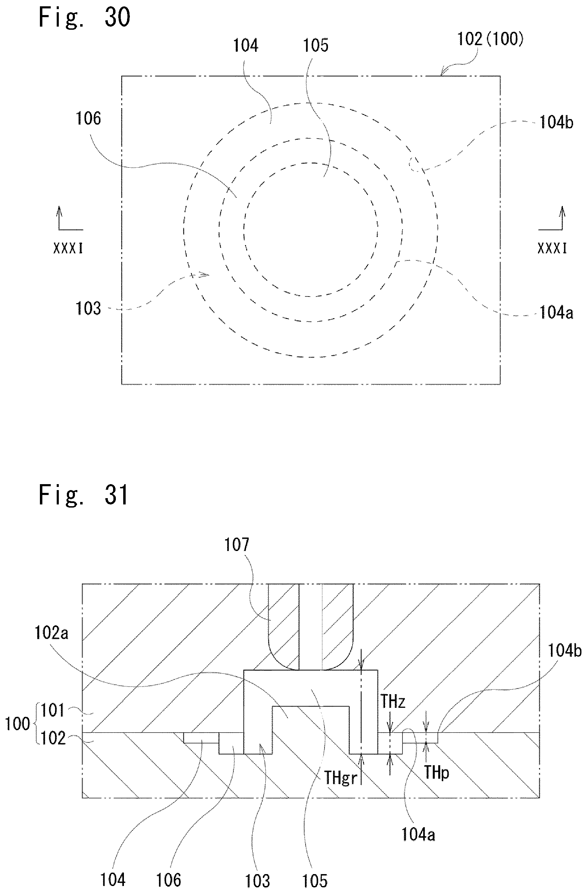

Figs. 30 to 33 show modifications of the present embodiment.

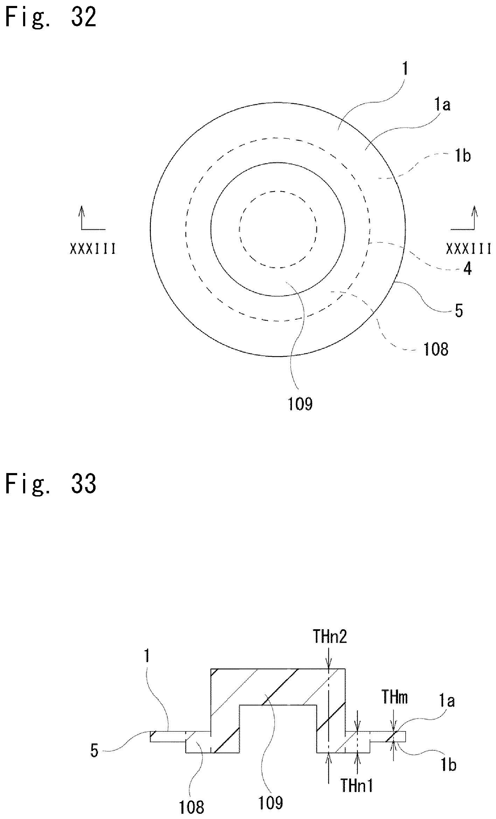

In the modification of Figs. 30 and 31, the gate/runner portion 105 protrudes upward from the product portion 104 and the land portion 106 in the drawings. The lower mold 102 includes a cylindrical portion 102a protruding upward in the drawings in a portion defining the gate/runner portion 105. Therefore, as shown in Figs. 32 and 33, the second non-product portion 109 in this modification protrudes upward from the sheet member 1 and the first non-product portion 108 in the drawings and has a shape in which a cylindrical recess is formed at the lower end.

(Fourth Embodiment)

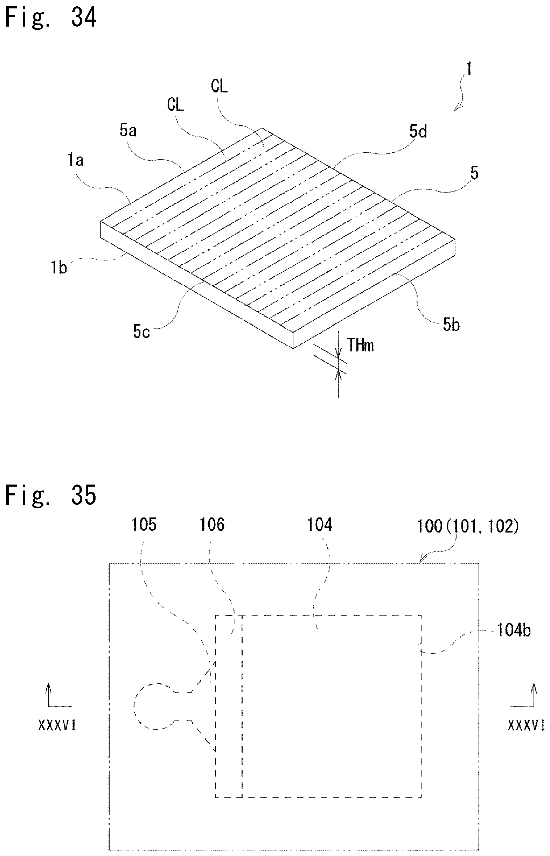

Fig. 34 shows the sheet member 1 according to a fourth embodiment of the present invention.

The sheet member 1 of the present embodiment has a flat rectangular shape. The outer peripheral edge portion 5 of the sheet member 1 includes a pair of straight edge portions 5a and 5b opposing each other and a pair of straight edge portions 5c and 5d opposing each other and connecting end portions of the straight edge portions 5a and 5b.

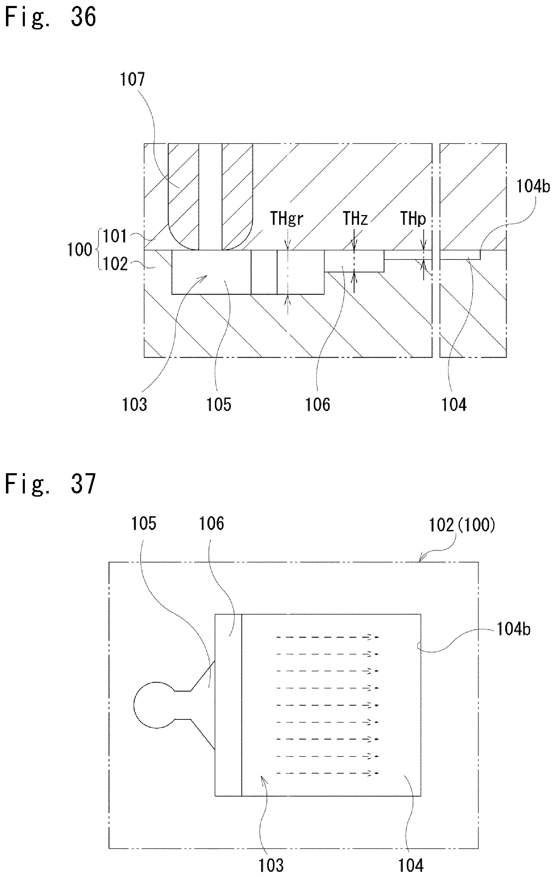

In Figs. 35 to 37, the forming mold 100 according to the present embodiment is provided with the land portion 106 having an elongated rectangular shape of a constant width at a portion corresponding to the straight edge portion 5a of the product portion 104. A single gate/runner portion 105 is provided on the opposite side of the land portion 106 from the product portion 104. The molten thermoplastic resin supplied from the molding machine injection unit to the gate/runner portion 105 fills the land portion 106, and then simultaneously flows from the land portion 106 into the product portion 104 as indicated by broken line arrows in Fig. 37. More specifically, as indicated by the broken line arrows in Fig. 37, the molten thermoplastic resin flows in one direction from the portion corresponding to the straight edge portion 5a toward the portion corresponding to the straight edge portion 5b of the outer peripheral edge portion 104b of the product portion 104.

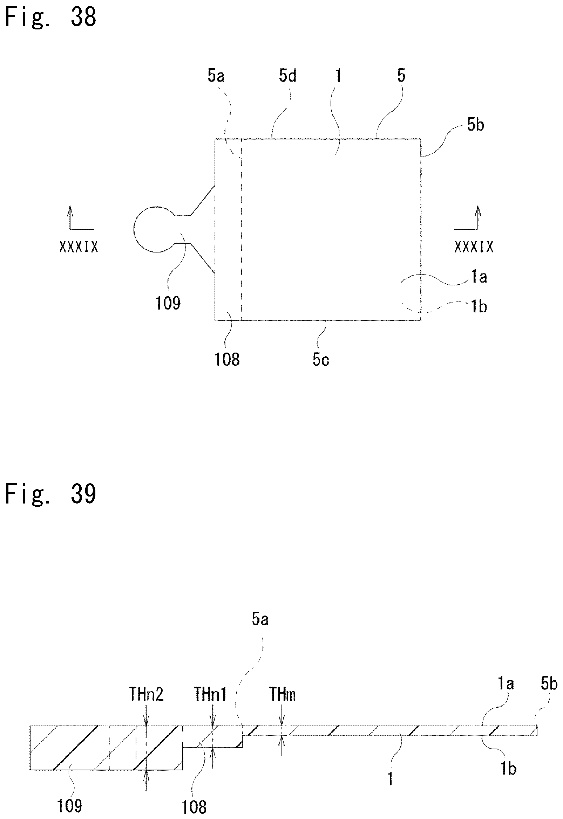

Figs. 38 and 39 show the sheet member 1 taken out from the forming mold 100 after completion of injection molding. The first non-product portion 108 having an elongated rectangular shape and corresponding to the land portion 106 is formed on the straight edge portion 5a side of the sheet member 1, and the second non-product portion 109 corresponding to the gate/runner portion 105 is formed on the opposite side of the first non-product portion 108 from the sheet member 1.

With the orientation of the thermoplastic resin being aligned in the flow direction of the thermoplastic resin (broken line arrows in Fig. 37) in the product portion 104 of the cavity 103, a plurality of coherent pattern lines CL conceptually indicated by two-dot chain lines in Fig. 34 appear in the sheet member 1. Specifically, a plurality of coherent pattern lines CL arranged at intervals in a direction in which the straight edge portion 5a and the straight edge portion 5b oppose each other appear. A pair in the coherent pattern lines CL adjacent to each other do not intersect.

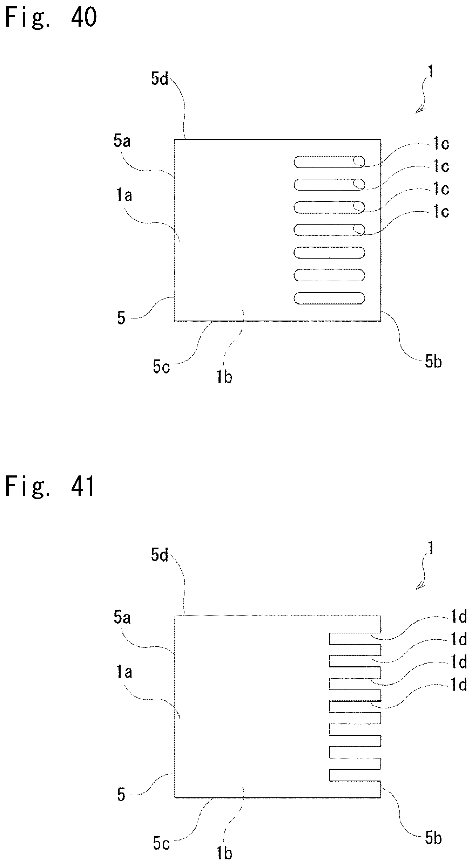

Figs. 40 and 41 show a modification of the fourth embodiment.

A plurality of through holes 1c are formed in the sheet member 1 of the modification shown in Fig. 40.

In the sheet member 1 shown in the modification shown in Fig. 41, a plurality of notches 1d extending from the straight edge portion 5b toward the straight edge portion 5a and terminating in the sheet member 1 are formed.

A through hole as shown in Fig. 40 and a notch as shown in Fig. 41 may be provided in the sheet member 1 according to an embodiment other than the fourth embodiment.

(Fifth Embodiment)

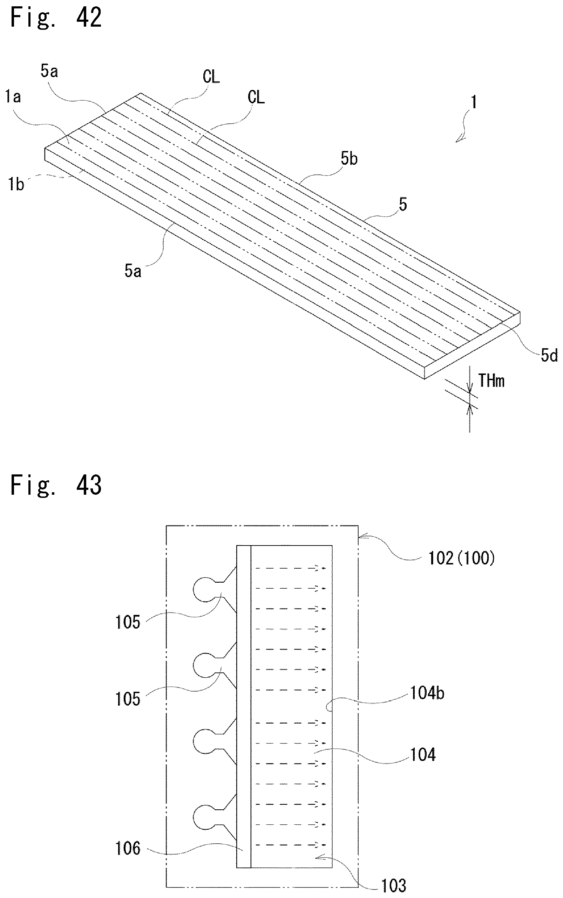

Fig. 42 shows the sheet member 1 according to a fifth embodiment of the present invention.

The sheet member 1 of the present embodiment has a flat rectangular shape as in the fourth embodiment (Fig. 34) but is longer than the sheet member 1 of the fourth embodiment. That is, the straight edge portions 5a and 5b which are parts of the outer peripheral edge portion 5 are sufficiently longer than the straight edge portions 5c and 5d which are also parts of the outer peripheral edge portion 5.

In Fig. 43, the forming mold 100 according to the present embodiment is provided with the land portion 106 having an elongated rectangular shape of a constant width at a portion corresponding to the straight edge portion 5a of the product portion 104. A plurality of gate/runner portions 105 are provided on the opposite side of the land portion 106 from the product portion 104. The molten thermoplastic resin supplied from the molding machine injection unit to the gate/runner portion 105 fills the land portion 106, and then simultaneously flows from the land portion 106 into the product portion 104 as indicated by the broken line arrows. More specifically, the molten thermoplastic resin flows in one direction from the portion corresponding to the straight edge portion 5c toward the portion corresponding to the straight edge portion 5b of the outer peripheral edge portion 104b of the product portion 104.

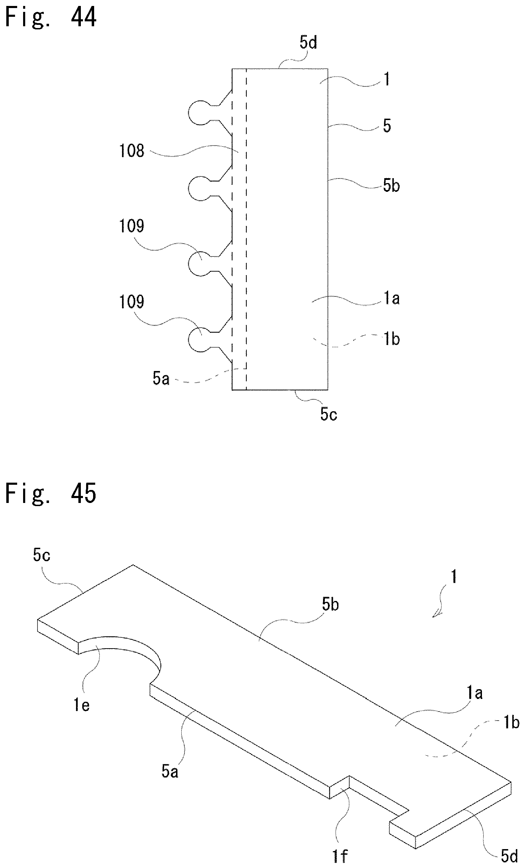

Fig. 44 shows the sheet member 1 taken out from the forming mold 100 after completion of injection molding. The first non-product portion 108 having an elongated rectangular shape and corresponding to the land portion 106 is formed on the straight edge portion 5a side of the sheet member 1, and the second non-product portion 109 corresponding to the gate/runner portion 105 is formed on the opposite side of the first non-product portion 108 from the sheet member 1.

Fig. 45 shows the sheet member 1 according to a modification of the present embodiment. A semicircular notch 1e and a rectangular notch 1f are formed in the straight edge portion 5c of the sheet member 1.

(Sixth Embodiment)

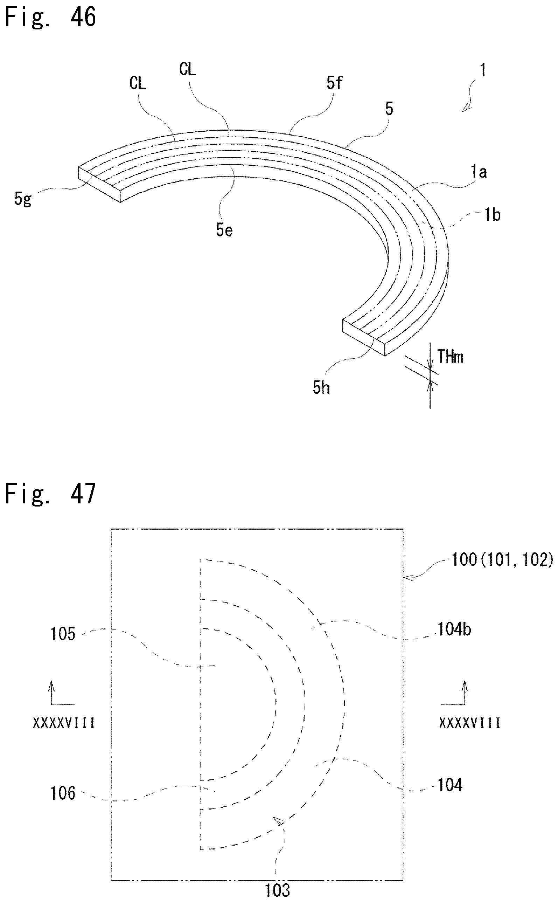

Fig. 46 shows the sheet member 1 according to a sixth embodiment of the present invention.

The sheet member 1 of the present embodiment has a semicircular arc shape. The outer peripheral edge portion 5 of the sheet member 1 includes a pair of arcuate edge portions 5e and 5f opposing each other and a pair of straight edge portions 5g and 5h connecting end portions of the arcuate edge portions 5e and 5f.

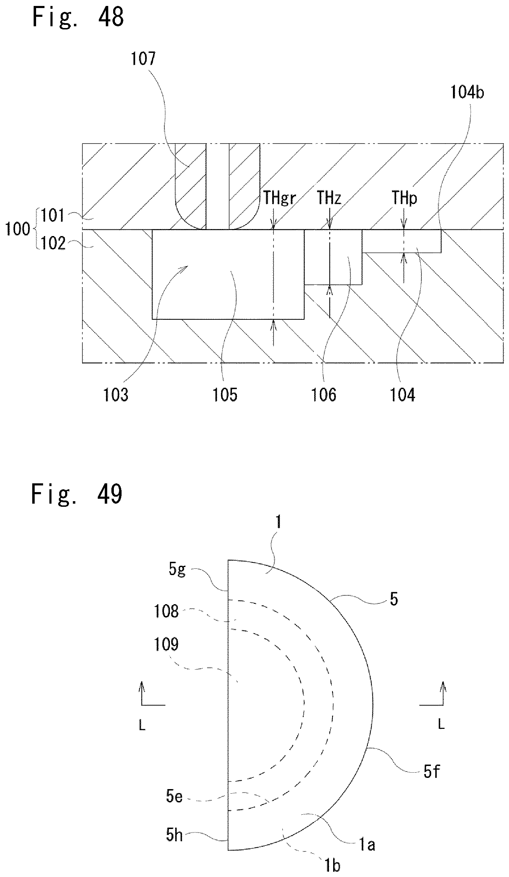

In Figs. 47 and 48, the forming mold 100 according to the present embodiment is provided with the land portion 106 having a semicircular arc shape of a constant width in a portion corresponding to the arcuate edge portion 5e of the product portion 104. A single gate/runner portion 105 having a semi-cylindrical shape is provided on the opposite side of the land portion 106 from the product portion 104. The molten thermoplastic resin supplied from the molding machine injection unit to the gate/runner portion 105 fills the land portion 106, then simultaneously flows from the land portion 106 into the product portion 104, and then flows in one direction from the portion corresponding to the arcuate edge portion 5e toward the portion corresponding to the arcuate edge portion 5f of the outer peripheral edge portion 104b of the product portion 104.

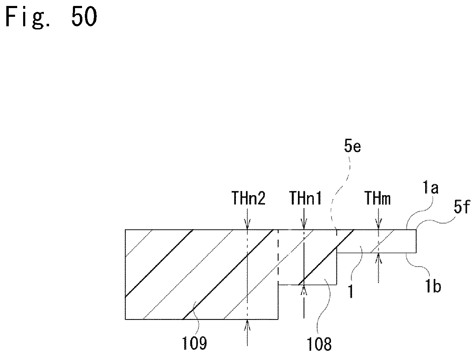

Figs. 49 and 50 show the sheet member 1 taken out from the forming mold 100 after completion of injection molding. The first non-product portion 108 having an annular shape and corresponding to the land portion 106 is formed on the arcuate edge portion 5e side of the sheet member 1, and the second non-product portion 109 having a semi-cylindrical shape and corresponding to the gate/runner portion 105 is formed on the opposite side of the first non-product portion 108 from the sheet member 1.

With the orientation of the thermoplastic resin being aligned in the flow direction of the thermoplastic resin in the product portion 104 of the cavity 103, a plurality of coherent pattern lines CL conceptually indicated by two-dot chain lines in Fig. 46 appear in the sheet member 1. Specifically, a plurality of coherent pattern lines CL arranged at intervals in a direction in which the straight edge portion 5a and the straight edge portion 5b oppose each other appear. A pair in the coherent pattern lines CL adjacent to each other do not intersect.

(Seventh Embodiment)

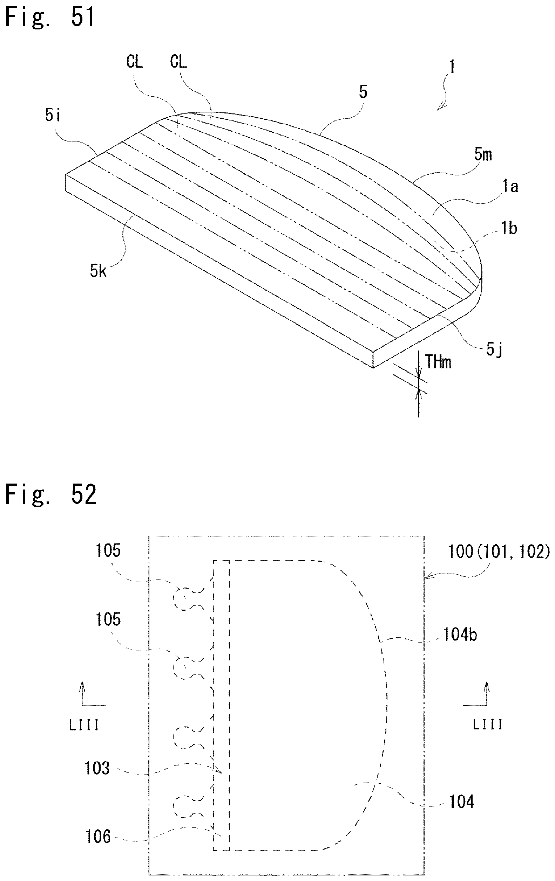

Fig. 51 shows the sheet member 1 according to a seventh embodiment of the present invention.

The outer peripheral edge portion 5 of the sheet member 1 of the present embodiment includes four edge portions similarly to the fourth and fifth embodiments. Specifically, the outer peripheral edge portion 5 of the sheet member 1 includes a pair of relatively short straight edge portions 5i and 5j opposing each other, a relatively long straight edge portion 5k connecting the straight edge portions 5i and 5j, and a curved edge portion 5m opposing the straight edge portion 5k.

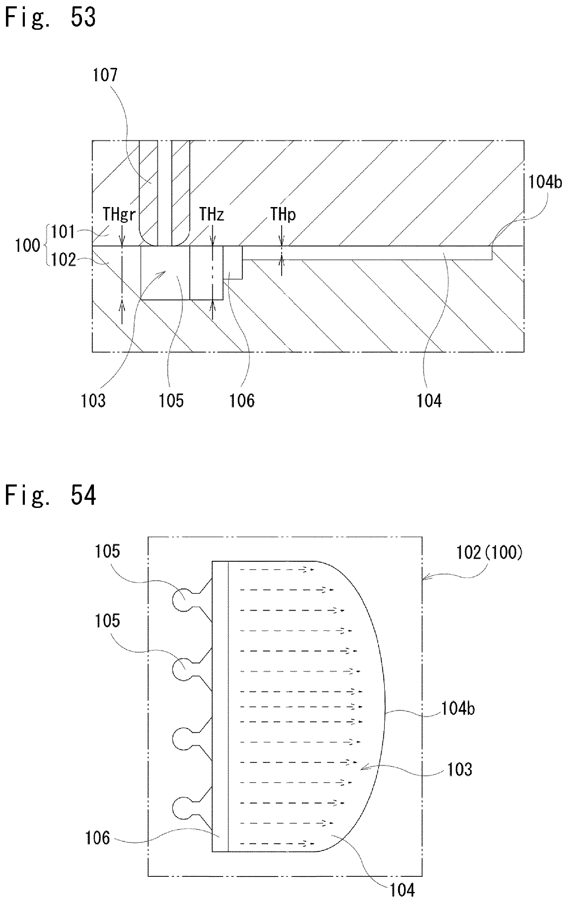

In Figs. 52 to 54, the forming mold 100 according to the present embodiment is provided with the land portion 106 having an elongated rectangular shape at a portion corresponding to the straight edge portion 5k of the product portion 104. A plurality of gate/runner portions 105 are provided on the opposite side of the land portion 106 from the product portion 104. The molten thermoplastic resin supplied from the molding machine injection unit to the gate/runner portion 105 fills the land portion 106, and then simultaneously flows from the land portion 106 into the product portion 104 as indicated by broken line arrows in Fig. 54. More specifically, the molten thermoplastic resin flows in one direction from the portion corresponding to the straight edge portion 5k toward the portion corresponding to the curved edge portion 5m of the outer peripheral edge portion 104b of the product portion 104.

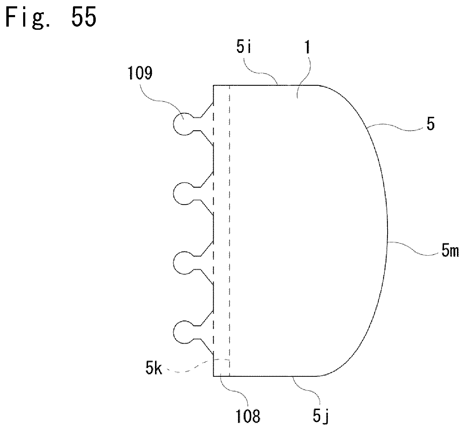

Fig. 55 shows the sheet member 1 taken out from the forming mold 100 after completion of injection molding. The first non-product portion 108 having an elongated rectangular shape and corresponding to the land portion 106 is formed on the straight edge portion 5k side of the sheet member 1, and the second non-product portion 109 corresponding to the gate/runner portion 105 is formed on the opposite side of the first non-product portion 108 from the sheet member 1.

(Eighth Embodiment)

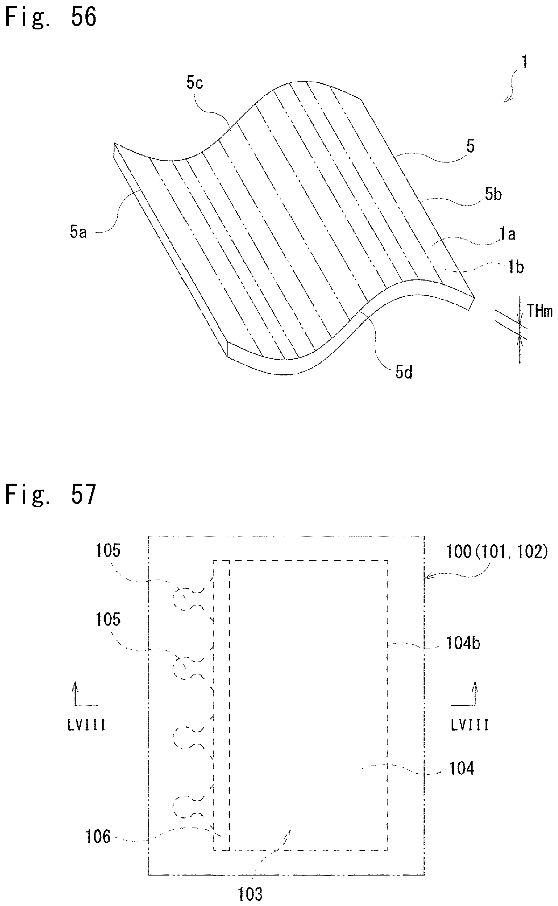

Fig. 56 shows the sheet member 1 according to an eighth embodiment of the present invention.

The sheet member 1 of the present embodiment has a rectangular shape as in the fourth and fifth embodiments (Figs. 34 and 42) when viewed from the opposing direction of the main surfaces 1a and 1b, and the outer peripheral edge portion 5 includes a pair of straight edge portions 5a and 5b and another pair of straight edge portions 5c and 5d connecting the pair of straight edge portions 5a and 5b. While the sheet member 1 of the fourth and fifth embodiments (Figs. 34 and 42) is flat, the sheet member 1 of the present embodiment is curved and has a curved surface shape. In the present embodiment, the sheet member 1 has a curve only in a direction in which the straight edge portions 5a and 5b oppose each other. However, the sheet member 1 may have a three-dimensional curved surface shape.

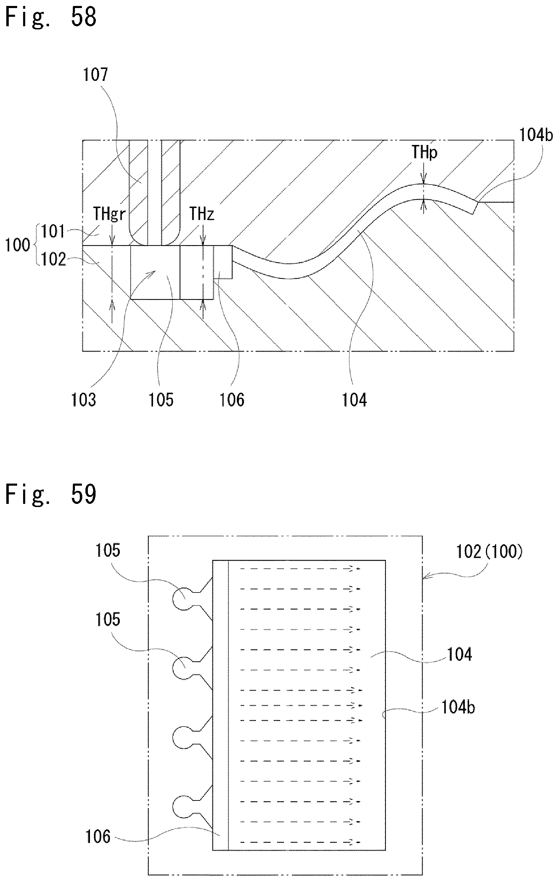

In Figs. 57 to 59, the forming mold 100 according to the present embodiment is provided with the land portion 106 having an elongated rectangular shape of a constant width at a portion corresponding to the straight edge portion 5a of the product portion 104. A plurality of gate/runner portions 105 are provided on the opposite side of the land portion 106 from the product portion 104. The molten thermoplastic resin supplied from the molding machine injection unit to the gate/runner portion 105 fills the land portion 106, and then simultaneously flows from the land portion 106 into the product portion 104 as indicated by broken line arrows in Fig. 59. More specifically, as indicated by broken line arrows in Fig. 59, the molten thermoplastic resin flows in one direction from the portion corresponding to the straight edge portion 5a toward the portion corresponding to the straight edge portion 5b of the outer peripheral edge portion 104b of the product portion 104.

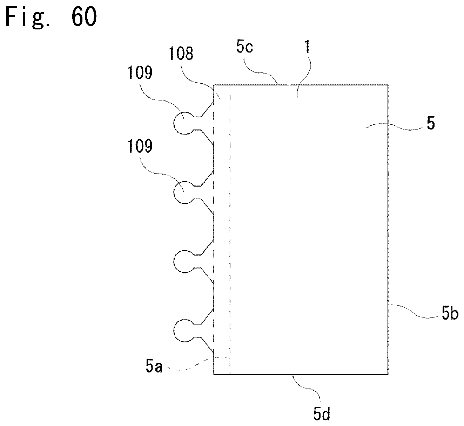

Fig. 60 shows the sheet member 1 taken out from the forming mold 100 after completion of injection molding. The first non-product portion 108 having an elongated rectangular shape and corresponding to the land portion 106 is formed on the straight edge portion 5a side of the sheet member 1, and the second non-product portion 109 corresponding to the gate/runner portion 105 is formed on the opposite side of the first non-product portion 108 from the sheet member 1.

With the orientation of the thermoplastic resin being aligned in the flow direction of the thermoplastic resin (broken line arrows in Fig. 59) in the product portion 104 of the cavity 103, a plurality of coherent pattern lines CL conceptually indicated by two-dot chain lines in Fig. 56 appear in the sheet member 1. Specifically, a plurality of coherent pattern lines CL arranged at intervals in a direction in which the straight edge portion 5a and the straight edge portion 5b oppose each other appear. A pair in the coherent pattern lines CL adjacent to each other do not intersect.

(Evaluation Test)

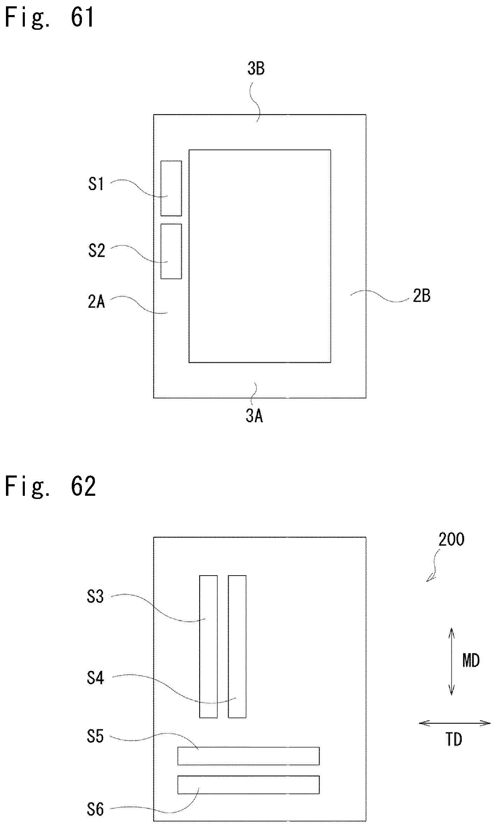

An evaluation test for verifying the dimensional stability of the gasket 4 according to the first embodiment was performed. Six samples were used in this evaluation test. As shown in Fig. 61, samples S1 and S2 are cut out from the longer portion 2A of the gasket 1 according to an embodiment (Example). As shown in Fig. 62, samples S3 to S6 are cut out from a thin resin film 200 that has been extruded (Comparative Example). The samples S3 and S4 are elongated in the flow direction (MD direction) of the resin in the extrusion molding, and the samples S5 and S6 are elongated in the direction (TD direction) orthogonal to the MD direction.

The sample S1 to S6 were placed in an environment of 80°C for 3 days, and the initial length and the length after 3 days were measured. The results of the evaluation test are shown in Table 2 below.

[Table 2]

| | Example Comparative Example | | | | | | | |
| --- | --- | --- | --- | --- | --- | --- | --- | --- |
| | Longer direction | | Shorter direction | | MD direction | | **TD** direction | |
| | Sample S1 | Sample S2 | Sample S1 | Sample S2 | Sample S3 | Sample S4 | Sample S5 | Sample S6 |
| Initial length (mm) | 40.09 | 40.07 | 15.05 | 15.21 | 100.18 | 99.62 | 100.16 | 100.24 |
| Length after 3 days (mm) | 39.89 | 39.95 | 15.00 | 15.13 | 99.10 | 98.80 | 99.20 | 99.43 |

(continued)

| | Example Comparative Example | | | | | | | |
| | Longer direction | | Shorter direction | | MD direction | | TD direction | |
| | Sample S1 | Sample S2 | Sample S1 | Sample S2 | Sample S3 | Sample S4 | Sample S5 | Sample S6 |
|---|---|---|---|---|---|---|---|---|
| Shrinkage amount (mm) | 0.20 | 0.12 | 0.05 | 0.08 | 1.08 | 0.82 | 0.96 | 0.81 |
| Shrinkage ratio (%) | 0.50 | 0.30 | 0.33 | 0.53 | 1.08 | 0.82 | 0.96 | 0.82 |
| Average | 0.40 | | 0.43 | | 0.95 | | 0.88 | |
| Standard deviation | 0.10 | | 0.10 | | 0.13 | | 0.08 | |

In the samples S1 and 2 of Example, the shrinkage ratio is less than 0.6% in both the longer direction and the shorter direction, whereas in the samples S3 and S4 of Comparative Example, the shrinkage ratio is more than 0.8% in both the MD direction and the TD direction. The test results indicate that the gasket 1 of the present embodiment manufactured by injection molding has excellent dimensional stability as compared with a gasket made of extruded thin resin film.

The present invention can also be applied to other thin resin sheet members such as gaskets and separators for other batteries such as nickel hydrogen batteries in addition to a fuel cell gasket.

REFERENCE SIGNS LIST

1: Thin resin sheet member (sheet member), 1a; 1b: Main surface, 1c: Through hole, 1d; 1e; 1f: Notch, 2A; 2B: Longer portion, 3A; 3B: Shorter portion, 4: Inner peripheral edge portion, 5: Outer peripheral edge portion, 5a, 5b, 5c, 5d: Straight edge portion, 5e, 5f: Arcuate edge portion, 5g; 5h: Straight edge portion, 5i; 5j; 5k: Straight edge portion, 5m: Curved edge portion, 11A; 11B; 11C; 11D; 11E; 11F: Side portion, 100: Forming mold, 101: Upper mold, 102: Lower mold, 102a: Cylindrical portion, 103: Cavity, 104: Product portion, 104a: Inner peripheral edge portion, 104b: Outer peripheral edge portion, 105: Gate / runner portion, 105a: Gate portion, 105b: Runner portion, 106: Land portion, 107: Spool, 108: First non-product portion, 109: Second non-product portion, 110: Spool bush, 110a: Spool, 112: Overflow portion, 113: Third non-product portion

**Claims**

1. A thin resin sheet member (1) comprising a pair of main surfaces (1a, 1b) opposing each other,

   wherein the thin resin sheet member (1) has a maximum thickness of 40 $\mu$m or more and 450 $\mu$m or less, the maximum thickness being a maximum interval between the pair of main surfaces (1a, 1b), and
   the thin resin sheet member (1) has a region in which a plurality of coherent pattern lines appear when viewed from a direction facing the pair of main surfaces (1a, 1b), the plurality of coherent pattern lines being arranged at intervals in a direction in which one edge portion and another edge portion opposing the one edge portion oppose each other, and a pair in the plurality of coherent pattern lines adjacent to each other do not intersect,
   **characterised by**
   the thin resin sheet member (1) being formed by injection of a thermoplastic resin and the coherent pattern lines being attributed to the manufacture by injection molding.

2. The thin resin sheet member (1) according to claim 1, wherein the region is 50% or more of a total area of the pair of main surfaces (1a, 1b).

3. The thin resin sheet member (1) according to claim 1 or 2, wherein the thermoplastic resin has a melt mass flow rate of 1 g/10 min or more and 300 g/10 min or less and a heat of fusion of 0 mj/mg or more and 150 mj/mg or less.

4. A method for manufacturing a thin resin sheet member (1), the method comprising:

preparing a forming mold (100) defining a cavity (103) including a product portion (104) in which a thin resin sheet member (1) is molded, a gate/runner portion (105) communicating with a molding machine injection unit, and a land portion (106) communicating with the gate/runner portion (105) and communicating with one edge portion of the product portion (104), wherein the land portion (106) has a thickness larger than a thickness of the product portion (104); and

supplying a molten resin from the molding machine injection unit to the gate/runner portion (105), wherein after the molten resin fully fills the land portion (106), the molten resin flows from the one edge portion into the product portion (104) and flows toward another edge portion opposing the one edge portion of the product portion (104), wherein

(i) the land portion (106) communicates with an entire region of an inner peripheral edge portion (4, 104a) of the product portion (104), and after the molten resin fills the land portion (106), the molten resin flows from the inner peripheral edge portion (4, 104a) into the product portion (104) and flows toward an outer peripheral edge portion (5, 104b) of the product portion (104) or

(ii) the land portion (106) communicates with an entire region of an outer peripheral edge portion (5, 104b) of the product portion (104), and after the molten resin fills the land portion (106), the molten resin flows from the outer peripheral edge portion (5, 104b) into the product portion (104) and flows toward an inner peripheral edge portion (4, 104a) of the product portion (104) or

(iii) the product portion (104) has an outer peripheral edge portion (5, 104b) including a plurality of edge portions, the land portion (106) communicates with one edge portion constituting a part of the outer peripheral edge portion (5, 104b) of the product portion (104), and after the molten resin fills the land portion (106), the molten resin flows from the one edge portion toward another edge portion opposing the one edge portion constituting a part of the outer peripheral edge portion (5, 104b).

**5.** The method for manufacturing a thin resin sheet member (1) according to claim 4, wherein the thickness of the land portion (106) is 1.3 times or more and 24 times or less the thickness of the product portion (104).

**6.** The method for manufacturing a thin resin sheet member (1) according to claim 4 or 5, wherein the land portion (106) has an average thickness of 300 $\mu$m or more and 1200 $\mu$m or less.

**7.** The method for manufacturing a thin resin sheet member (1) according to any one of claims 4 to 6, wherein the resin is a thermoplastic resin having a melt mass flow rate of 10 g/10 min or more and 300 g/10 min or less and a heat of fusion of 0 mj/mg or more and 150 mj/mg or less.

**Patentansprüche**

**1.** Dünnes Harzschichtelement (1), das ein Paar einander gegenüberliegender Hauptflächen (1a, 1b) umfasst,

wobei das dünne Harzschichtelement (1) eine maximale Dicke von 40 $\mu$m oder mehr und 450 $\mu$m oder weniger aufweist, wobei die maximale Dicke ein maximaler Abstand zwischen dem Paar von Hauptflächen (1a, 1b) ist, und

das dünne Harzschichtelement (1) einen Bereich aufweist, in dem mehrere kohärente Musterlinien erscheinen, wenn man aus einer Richtung blickt, die dem Paar von Hauptflächen (1a, 1b) zugewandt ist, wobei die mehreren kohärenten Musterlinien in Abständen in einer Richtung angeordnet sind, in der ein Randabschnitt und ein dem einen Randabschnitt gegenüberliegender anderer Randabschnitt einander gegenüberliegen, und sich ein Paar der mehreren kohärenten Musterlinien, die benachbart sind, nicht schneiden, **dadurch gekennzeichnet, dass**

das dünne Harzschichtelement (1) durch Einspritzen eines thermoplastischen Harzes geformt ist und die kohärenten Musterlinien auf die Herstellung durch Spritzgießen zurückzuführen sind.

**2.** Dünnes Harzschichtelement (1) nach Anspruch 1, wobei der Bereich 50 % oder mehr der Gesamtfläche des Paares von Hauptflächen (1a, 1b) ausmacht.

**3.** Dünnes Harzschichtelement (1) nach Anspruch 1 oder 2, wobei das thermoplastische Harz eine Schmelze-Massefließrate von 1 g/10 min oder mehr und 300 g/10 min oder weniger und eine Schmelzwärme von 0 mj/mg oder mehr und 150 mj/mg oder weniger aufweist.

4. Verfahren zur Herstellung eines dünnen Harzschichtelements (1), wobei das Verfahren umfasst:

Vorbereiten eines Formwerkzeugs (100), das einen Hohlraum (103) definiert, der einen Produktabschnitt (104), in dem ein dünnes Harzschichtelement (1) geformt wird, einen Anguss-/Verteilerabschnitt (105), der mit einer Spritzgießmaschinenspritzeinheit in Verbindung steht, und einen Stegabschnitt (106) umfasst, der mit dem Anguss-/Verteilerabschnitt (105) in Verbindung steht und mit einem Randabschnitt des Produktabschnitts (104) in Verbindung steht, wobei der Stegabschnitt (106) eine Dicke aufweist, die größer ist als eine Dicke des Produktabschnitts (104); und

Zuführen von geschmolzenem Harz von der Spritzgießmaschinenspritzeinheit zum Anguss-/Verteilerabschnitt (105), wobei, nachdem das geschmolzene Harz den Stegabschnitt (106) vollständig gefüllt hat, das geschmolzene Harz von dem einen Randabschnitt in den Produktabschnitt (104) fließt und zu einem anderen Randabschnitt fließt, der dem einen Randabschnitt des Produktabschnitts (104) gegenüberliegt, wobei

(i) der Stegabschnitt (106) mit einem gesamten Bereich eines inneren Umfangsrandabschnitts (4, 104a) des Produktabschnitts (104) in Verbindung steht, und, nachdem das geschmolzene Harz den Stegabschnitt (106) gefüllt hat, das geschmolzene Harz von dem inneren Umfangsrandabschnitt (4, 104a) in den Produktabschnitt (104) fließt und in Richtung eines äußeren Umfangsrandabschnitts (5, 104b) des Produktabschnitts (104) fließt oder

(ii) der Stegabschnitt (106) mit einem gesamten Bereich eines äußeren Umfangsrandabschnitts (5, 104b) des Produktabschnitts (104) in Verbindung steht, und, nachdem das geschmolzene Harz den Stegabschnitt (106) gefüllt hat, das geschmolzene Harz von dem äußeren Umfangsrandabschnitt (5, 104b) in den Produktabschnitt (104) fließt und in Richtung eines inneren Umfangsrandabschnitts (4, 104a) des Produktabschnitts (104) fließt oder

(iii) der Produktabschnitt (104) einen äußeren Umfangsrandabschnitt (5, 104b) aufweist, der mehrere Randabschnitte umfasst, wobei der Stegabschnitt (106) mit einem Randabschnitt in Verbindung steht, der einen Teil des äußeren Umfangsrandabschnitts (5, 104b) des Produktabschnitts (104) bildet, und, nachdem das geschmolzene Harz den Stegabschnitt (106) gefüllt hat, das geschmolzene Harz von dem einen Randabschnitt zu einem anderen Randabschnitt fließt, der dem einen Randabschnitt gegenüberliegt, der einen Teil des äußeren Umfangsrandabschnitts (5, 104b) bildet.

5. Verfahren zur Herstellung eines dünnen Harzschichtelements (1) nach Anspruch 4, wobei die Dicke des Stegabschnitts (106) ein 1,3-faches oder mehr und ein 24-faches oder weniger der Dicke des Produktabschnitts (104) beträgt.

6. Verfahren zur Herstellung eines dünnen Harzschichtelements (1) nach Anspruch 4 oder 5, wobei der Stegabschnitt (106) eine durchschnittliche Dicke von 300 $\mu$m oder mehr und 1200 $\mu$m oder weniger aufweist.

7. Verfahren zur Herstellung eines dünnen Harzschichtelements (1) nach einem der Ansprüche 4 bis 6, wobei das Harz ein thermoplastisches Harz mit einer Schmelze-Massefließrate von 10 g/10 min oder mehr und 300 g/10 min oder weniger und einer Schmelzwärme von 0 mj/mg oder mehr und 150 mj/mg oder weniger ist.

**Revendications**

1. Élément en feuille de résine mince (1) comprenant une paire de surfaces principales (1a, 1b) opposées l'une à l'autre,

dans lequel l'élément en feuille de résine mince (1) possède une épaisseur maximale de 40 $\mu$m ou plus et de 450 $\mu$m ou moins, l'épaisseur maximale étant un intervalle maximal entre la paire de surfaces principales (1a, 1b), et l'élément en feuille de résine mince (1) possède une région dans laquelle une pluralité de lignes de motif cohérentes apparaissent lorsqu'on les observe depuis une direction faisant face à la paire de surfaces principales (1a, 1b), la pluralité de lignes de motif cohérentes étant agencées à intervalles dans une direction dans laquelle une portion de bord et une autre portion de bord opposée à ladite portion de bord sont opposées l'une à l'autre, et une paire dans la pluralité de lignes de motif cohérentes adjacentes l'une à l'autre ne se croisent pas, **caractérisé par le fait que** l'élément en feuille de résine mince (1) est formé par l'injection d'une résine thermoplastique et les lignes de motif cohérentes sont attribuées à la fabrication par moulage par injection.

2. Élément en feuille de résine mince (1) selon la revendication 1, dans lequel la région représente 50 % ou plus de l'aire totale de la paire de surfaces principales (1a, 1b).

3. Élément en feuille de résine mince (1) selon la revendication 1 ou 2, dans lequel la résine thermoplastique possède un indice de fluidité massique à l'état fondu de 1 g/10 min ou plus et de 300 g/10 min ou moins et une enthalpie de fusion de 0 mj/mg ou plus et de 150 mj/mg ou moins.

4. Procédé de fabrication d'un élément en feuille de résine mince (1), le procédé comprenant :

la préparation d'un moule de formage (100) définissant une cavité (103) incluant une portion de produit (104) dans laquelle un élément en feuille de résine mince (1) est moulé, une portion d'entrée/canal secondaire d'injection (105) communiquant avec une unité d'injection de machine de moulage, et une portion d'appui (106) communiquant avec la portion d'entrée/canal secondaire d'injection (105) et communiquant avec une portion de bord de la portion de produit (104), dans lequel la portion d'appui (106) possède une épaisseur supérieure à une épaisseur de la portion de produit (104) ; et

l'alimentation d'une résine fondue de l'unité d'injection de machine de moulage à la portion d'entrée/canal secondaire d'injection (105), dans lequel, après que la résine fondue remplit complètement la portion d'appui (106), la résine fondue s'écoule de ladite portion de bord jusque dans la portion de produit (104) et s'écoule vers une autre portion de bord opposée à ladite portion de bord de la portion de produit (104), dans lequel

(i) la portion d'appui (106) communique avec la totalité d'une région d'une portion de bord périphérique interne (4, 104a) de la portion de produit (104), et après que la résine fondue remplit la portion d'appui (106), la résine fondue s'écoule de la portion de bord périphérique interne (4, 104a) dans la portion de produit (104) et s'écoule vers une portion de bord périphérique externe (5, 104b) de la portion de produit (104) ou

(ii) la portion d'appui (106) communique avec la totalité d'une région d'une portion de bord périphérique externe (5, 104b) de la portion de produit (104), et après que la résine fondue remplit la portion d'appui (106), la résine fondue s'écoule de la portion de bord périphérique externe (5, 104b) jusque dans la portion de produit (104) et s'écoule vers une portion de bord périphérique interne (4, 104a) de la portion de produit (104) ou

(iii) la portion de produit (104) possède une portion de bord périphérique externe (5, 104b) incluant une pluralité de portions de bord, la portion d'appui (106) communique avec une portion de bord constituant une partie de la portion de bord périphérique externe (5, 104b) de la portion de produit (104), et après que la résine fondue remplit la portion d'appui (106), la résine fondue s'écoule de ladite portion de bord vers une autre portion de bord opposée à ladite portion de bord constituant une partie de la portion de bord périphérique externe (5, 104b).

5. Procédé de fabrication d'un élément en feuille de résine mince (1) selon la revendication 4, dans lequel l'épaisseur de la portion d'appui (106) est de 1,3 fois ou plus et de 24 fois ou moins l'épaisseur de la portion de produit (104).

6. Procédé de fabrication d'un élément en feuille de résine mince (1) selon la revendication 4 ou 5, dans lequel la portion d'appui (106) possède une épaisseur moyenne de 300 $\mu$m ou plus et de 1200 $\mu$m ou moins.

7. Procédé de fabrication d'un élément en feuille de résine mince (1) selon l'une quelconque des revendications 4 à 6, dans lequel la résine est une résine thermoplastique ayant un indice de fluidité massique à l'état fondu de 10 g/10 min ou plus et de 300 g/10 min ou moins et une enthalpie de fusion de 0 mj/mg ou plus et de 150 mj/mg ou moins.

Fig. 1

Fig. 2

Fig. 3

100 (101, 102)

105

103    105    106    104    104a    104b

Fig. 4

107    104a    104b

THgr    THz    THp

100 {101 / 102}

103    105    106    104

Fig. 5

102 (100)

105    105

103

106    104    104a    104b

Fig. 6

1    108    2A    109    109    4    5

VII    VII

3A    3B

1b    1a    2B

Fig. 7

THn2  THn1  THm  1a  4  5

109  108  1  1b

Fig. 8

110  110a  104a  104b

THgr  THz  THp

103  105  106  104

Fig. 9

102 (100)

105    105

103

104    106    104a    104b

Fig. 10

1    108    109    109    2A    4    5

3A

XI    XI

1b    1a    2B

Fig. 11

Fig. 12

Fig. 13

Fig. 14

Fig. 15

Fig. 16

Fig. 17

Fig. 18

EP 4 052 880 B1

Fig. 19

Fig. 20

28

Fig. 21

Fig. 22

Fig. 23

Fig. 24

Fig. 25

Fig. 26

Fig. 27

# Fig. 28

# Fig. 29

Fig. 30

Fig. 31

Fig. 32

Fig. 33

Fig. 34

Fig. 35

Fig. 36

Fig. 37

Fig. 38

Fig. 39

Fig. 40

Fig. 41

Fig. 42

Fig. 43

Fig. 44

Fig. 45

EP 4 052 880 B1

Fig. 46

Fig. 47

Fig. 48

Fig. 49

Fig. 50

Fig. 51

Fig. 52

Fig. 53

Fig. 54

Fig. 55

Fig. 56

Fig. 57

Fig. 58

Fig. 59

Fig. 60

Fig. 61

3B

S1

S2

2A

2B

3A

Fig. 62

200

S3

S4

S5

S6

MD

TD

**EP 4 052 880 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150207156 A1
- JP 2004066720 A
- JP 2003071886 A
- WO 2014147008 A1
- JP 61185426 A
- JP 61040129 A
- JP 2016207445 A